# EUROPEAN PATENT SPECIFICATION

(11) **EP 4 625 191 B1**
(45) Date of publication and mention of the grant of the patent: **11.11.2026**
(21) Application number: 24905095.6
(22) Date of filing: 30.05.2024
(51) Int. Cl.: G06F 13/16

(54) **MEMORY CONTROLLER, MEMORY ACCESS METHOD, CHIP, AND ELECTRONIC DEVICE**
SPEICHERSTEUERUNG, SPEICHERZUGRIFFSVERFAHREN, CHIP UND ELEKTRONISCHE VORRICHTUNG
CONTRÔLEUR DE MÉMOIRE, PROCÉDÉ D'ACCÈS À LA MÉMOIRE, PUCE ET DISPOSITIF ÉLECTRONIQUE

(30) Priority: 31.01.2024 CN 202410144118
(43) Date of publication of application: 01.10.2025
(73) Proprietor: Hygon Information Technology Co., Ltd., Tianjin 300392 (CN)
(72) Inventor: TAN, Longsheng, Binhai New Area, Tianjin 300392 (CN)
(74) Representative: Maiwald GmbH
(86) International application number: PCT/CN2024/096228
(87) International publication number: WO 2025/161213

(56) References cited:
- CN-A- 105 260 331
- CN-A- 109 690 508
- CN-A- 110 729 006
- CN-A- 116 737 604
- CN-A- 117 951 052
- US-A1- 2009 327 596
- US-A1- 2018 018 105
- US-A1- 2022 413 759

## Description

### TECHNICAL FIELD

Embodiments of the present disclosure relate to a memory controller, a memory access method, a chip and an electronic device.

### BACKGROUND

In order to reduce problems, such as bandwidth loss and increased latency, etc., caused by the speed difference between the cache and the hard disk (such as non-volatile memory), a memory (such as dynamic random access memory) can be set between the cache and the hard disk to reduce the problems caused by the speed difference between the cache and the hard disk.

As an important device for managing and controlling the memory, the memory controller can be responsible for coordinating, controlling and executing tasks related to memory access operations (such as read operations or write operations). The overhead of the memory controller is an important performance indicator of the memory controller. How to provide an improved memory controller to reduce the overhead of the memory controller has become an urgent technical problem that those skilled in the art need to solve.

US 2009327596 A1 provides memory control techniques for dual channel lockstep configurations. In accordance with one example embodiment, a memory controller issues two burst-length 4 DRAM commands to two double-data-rate (DDR) DRAM sub-channels behind a memory buffer (e.g., FB-DIMM or buffer-on-board). The two commands are in time-staggered lockstep. The time-stagger allows data coming back from the two back-side DDR sub-channels to flow naturally on the host channel without conflict. Multiple DIMMs can be used to obtain chip-fail ECC capabilities and to reclaim at least some of the lost performance imposed by the burst-length of 4 s typically associated with dual channel lockstep memory controllers. The techniques can be implemented, for instance, with a buffered memory solution such as fully buffered

DIMM (FB-DIMM) or buffer-on-board configurations. This document discloses a memory controller configured to transmit data to and from a memory through a memory channel, the memory channel comprises a zeroth pseudo channel and a first pseudo channel; the memory controller comprises a common control logic circuit and a command replicator; wherein the common control logic circuit is shared by the zeroth pseudo channel and the first pseudo channel, and the common control logic circuit is configured to determine a request command corresponding to a memory access request, the command replicator being configured to replicate the request command to obtain a corresponding replicated request command; wherein the non-replicated request command comes from the common control logic circuit , and the replicated request command comes from the command replicator.

US 20180018105 A1 provides a memory controller having a memory channel controller including a command queue and an arbiter. The command queue stores memory access requests including a sub-channel number in a virtual controller mode. The arbiter is coupled to the command queue to select memory access commands from the command queue according to predetermined criteria. In the virtual controller mode, the arbiter selects from among the memory access requests in each sub-channel independently using the predetermined criteria, and sends selected memory access requests to a corresponding one of a plurality of sub-channels. In another form, a data processing system includes a plurality of memory channels and such a memory controller coupled to the plurality of sub-channels.

### SUMMARY

In view of this, the embodiments of the present disclosure provide a memory controller, a memory access method, a chip and an electronic device, so as to reduce the overhead of the memory controller.

In order to achieve the above objectives, the embodiments of the present disclosure provide the following technical solutions.

In a first aspect, an embodiment of the present disclosure provides a memory controller, wherein data is transmitted between the memory controller and a memory through a memory channel, the memory channel comprises a zeroth pseudo channel and a first pseudo channel; the memory controller comprises a common control logic circuit, a final arbiter and a command replicator;
the common control logic circuit is shared by the zeroth pseudo channel and the first pseudo channel, and the common control logic circuit is configured to determine a request command corresponding to a memory access request and send the request command to the final arbiter;
the command replicator is configured to replicate, when a command output by the final arbiter is a non-replicated request command and the request command meets a preset replication condition, the request command to obtain a corresponding replicated request command, and to send the replicated request command to the final arbiter; and
the final arbiter is configured to conduct final arbitration on a command sent to the final arbiter; if the command passed by the final arbitration is a non-replicated request command, output the request command and indicate transmission through the zeroth pseudo channel; and during at least one clock cycle after outputting the non-replicated request command, finally arbitrate to pass the corresponding replicated request command, output the replicated request command and indicate transmission through the first pseudo channel;
wherein the non-replicated request command comes from the common control logic circuit, and the replicated request command comes from the command replicator.

In a second aspect, an embodiment of the present disclosure provides a memory access method, applied to the memory controller according to the above first aspect, wherein data is transmitted between the memory controller and a memory through a memory channel, the memory channel comprises a zeroth pseudo channel and a first pseudo channel; the method comprises:
determining a request command corresponding to a memory access request, wherein the request command corresponding to the memory access request participates in final arbitration;
and replicating, when a command output by the final arbitration is a non-replicated request command and the request command meets a preset replication condition, the request command to obtain a corresponding replicated request command, wherein the replicated request command participates in final arbitration;
conducting final arbitration on commands participating in final arbitration; if the command passed by the final arbitration is a non-replicated request command, outputting the request command and indicating transmission through the zeroth pseudo channel; and during at least one clock cycle after outputting the non-replicated request command, finally arbitrating to pass the corresponding replicated request command, outputting the replicated request command and indicating transmission through the first pseudo channel.

In a third aspect, an embodiment of the present disclosure provides a chip, comprising: at least one processor core, the memory controller according to the above first concept, a memory physical layer, and the memory;
wherein the at least one processor core is connected with the memory controller; and the memory physical layer comprises the memory channel.

In a fourth aspect, an embodiment of the present disclosure provides an electronic device, comprising the chip according to the above third aspect, or the memory controller according to the above first aspect.

In the embodiments of the present disclosure, the non-replicated request command (coming from the common control logic circuit) output by the final arbiter is transmitted through the zeroth pseudo channel, and for the non-replicated request command output by the final arbiter and meeting the preset replication condition, the command replicator replicates the request command; and then, the final arbiter outputs the corresponding replicated request command and transmit it through the first pseudo channel during at least one clock cycle after outputting the non-replicated request command. It can be seen that the memory controller cooperatively controls the zeroth pseudo channel and the first pseudo channel in the case where the zeroth pseudo channel is set to transmit the non-replicated request command and the first pseudo channel is set to transmit the replicated request command. That is, the memory controller is provided with a common control logic circuit shared by the zeroth pseudo channel and the first pseudo channel, the request command is replicated by the command replicator, the non-replicated request command is arbitrated by the final arbiter to transmit through the zeroth pseudo channel and the replicated request command is arbitrated by the final arbiter to transmit through the first pseudo channel, so that the common control logic circuit treats the zeroth pseudo channel and the first pseudo channel as a whole channel for control, so as to realize the cooperative control of the zeroth pseudo channel and the first pseudo channel through a set of control logic in the memory controller, reduce the number of control logic circuits used by the memory controller, and reduce the overhead of the memory controller.

### BRIEF DESCRIPTION OF DRAWINGS

In order to describe the embodiments of the present disclosure more clearly, the drawings required in the description of the embodiments are briefly introduced below. Apparently, the drawings in the following description are only some of the embodiments recorded in the present disclosure.
Fig. 1 is a diagram of a chip provided by an embodiment of the present disclosure;
Fig. 2 is a diagram of a memory controller provided by an embodiment of the present disclosure;
Fig. 3 is a flowchart of a memory access method provided by an embodiment of the present disclosure;
Fig. 4A is another diagram of a memory controller provided by an embodiment of the present disclosure;
Fig. 4B is another flowchart of a memory access method provided by an embodiment of the present disclosure;
Fig. 4C is further another flowchart of a memory access method provided by an embodiment of the present disclosure;
Fig. 4D is still another flowchart of a memory access method provided by an embodiment of the present disclosure;
Fig. 5A is yet another flowchart of a memory access method provided by an embodiment of the present disclosure;
Fig. 5B is yet another flowchart of a memory access method provided by an embodiment of the present disclosure;
Fig. 5C is yet another flowchart of a memory access method provided by an embodiment of the present disclosure;
Fig. 6 is a flowchart of performing timing parameter counting on commands according to an embodiment of the present disclosure;
Fig. 7 is further another diagram of a memory controller provided by an embodiment of the present disclosure;
Fig. 8 is a flowchart of determining a request command of a memory access request provided by an embodiment of the present disclosure; and
Fig. 9 is still another diagram of a memory controller provided by an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present application, rather than all of the embodiments. Based on the embodiments in the present disclosure, all other embodiments obtained by those of ordinary skill in the art without creative efforts and being in the scope defined by the independent claims fall within the scope of protection of the present disclosure.

The memory controller serves as a bridge between the processor core (e.g., CPU core) and the memory. On the one hand, the memory controller can be connected to a system bus through an interface, so as to be connected to the processor core through the system bus; on the other hand, the memory controller can be connected to a physical layer through an interface (the physical layer connected to the memory controller can be called a memory physical layer), so as to be connected to the memory through the memory physical layer. Furthermore, the memory controller is controlled by the processor core to configure a mode register, perform a memory access operation (such as a read operation or a write operation) on the memory, and issue control commands (such as memory refresh, pre-charge and other control commands).

In order to realize data transmission between the memory controller and the memory, the memory physical layer can have multiple memory channels for data transmission between the memory controller and the memory. Taking HBM3 (High Bandwidth Memory 3, the third generation of high-bandwidth memory) technology as an example, in HBM3 technology, the memory controller can be called an HBM3 memory controller, the memory channel can be called an HBM3 channel, and the memory can be called an HBM3 memory. One HBM3 memory (e.g., a DRAM memory) can support 16 HBM3 channels, and each HBM3 channel can have an independent command interface and an independent data interface. As an example, one DRAM (Dynamic Random Access Memory) die supports 4 HBM3 channels, so that a DRAM memory stacked with 4 DRAM dies can support 16 HBM3 channels.

The memory channel (such as HBM3 channel) is logically divided into a zeroth pseudo channel and a first pseudo channel by pseudo channel mode, and one memory channel is divided into at least one zeroth pseudo channel and at least one first pseudo channel. For example, one memory channel is logically divided into two pseudo channels (one zeroth pseudo channel and one first pseudo channel). Data transmission supported by memory channel is undertaken through the divided pseudo channels.

In the case where the ECC (Error Checking and Correcting) bit is not included, the data length of data that one pseudo channel supports to transmit (i.e. the amount of data transmitted by one pseudo channel through one column command) is defined as a first data length, the total data length of data that the pseudo channels included in the memory channel support to transmit is defined as a second data length (for example, the second data length is the total data length of data that the zeroth pseudo channel and the first pseudo channel included in the memory channel support to transmit), and the multiple of the second data length relative to the first data length corresponds to the number of pseudo channels divided from one memory channel; and as one memory channel is divided into two pseudo channels (one zeroth pseudo channel and one first pseudo channel), the second data length is twice the first data length.

Taking HBM3 technology as an example, one read or write of HBM3 technology is realized by continuously operating 8 columns of data in a specified row, and 32 bits of data is operated in each column. That is to say, the data bit width of one pseudo channel refers to the number of data bus bits owned by one pseudo channel. For example, in HBM3 technology, the data bit width of one pseudo channel is 32 bits. The data length of data that one pseudo channel supports to transmit refers to the amount of data that one pseudo channel transmits through one column command. Because one column command is realized by continuously operating 8 columns of data in a specified row, the data length of data that one pseudo channel supports to transmit is exemplified as 32bit × 8=32bytes, where 1byte=8bits. Based on this, in the case where the ECC bit is not included, the data length of data that one pseudo channel supports to transmit is 32 bytes, that is, an example of the first data length can be 32 bytes; in the case where one HBM3 channel is divided into one zeroth pseudo channel and one first pseudo channel, the second data length is twice the first data length, and the second data length is 64 bytes.

It should be noted that because pseudo channels are logically divided from the memory channel (e.g., HBM3 channel), pseudo channels are also called pseudo-channels.

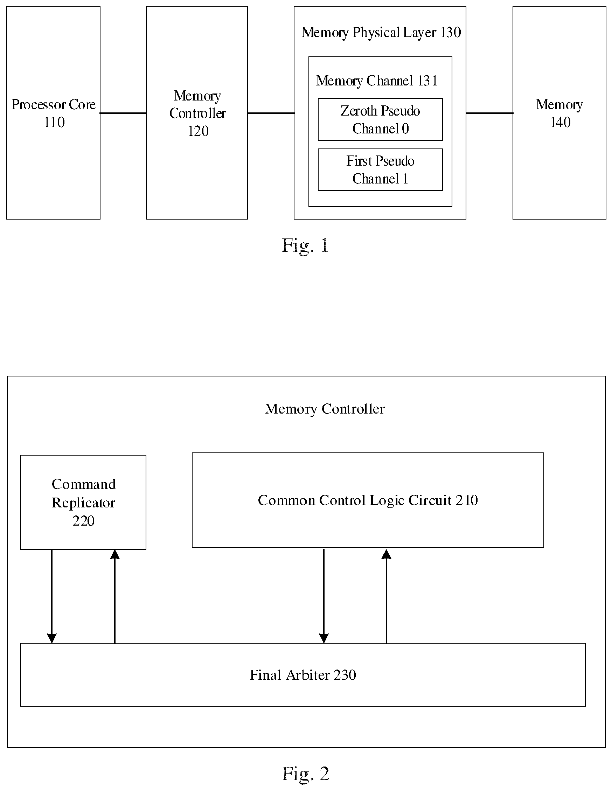

For ease of understanding, Fig. 1 illustratively shows a diagram of a chip provided by an embodiment of the present disclosure. As shown in Fig. 1, the chip includes a processor core 110, a memory controller 120, a memory physical layer 130, and a memory 140.

The processor core 110 is the computing core of a processor, is used for data calculation and program execution, and includes but is not limited to the computing core of CPU (Central Processing Unit) or the computing core of GPU (Graphics Processing Unit), etc. The number of processor cores 110 is at least one (one or more), which is not limited in the embodiment of the present disclosure.

The memory controller 120 and the processor core 110 is connected through a system bus, and for example, the interface of the memory controller 120 is connected to the system bus, thus being connected to the processor core 110 through the system bus. The system bus includes a command bus and a data bus, so that the memory controller 120 receives a memory access request from the processor core 110 through the command bus and exchange data with the processor core 110 through the data bus. The number of memory controllers 120 is at least one (one or more), which is not limited in the embodiment of the present disclosure.

It should be noted that the processor core sends a memory access request to the memory controller, so as to request a memory access operation, such as a read operation or a write operation, etc., on the memory. The memory access requests are divided into read requests and write requests. The read request is a memory access request corresponding to the read operation, which is used to request reading data from the memory and returning it to the processor core; the data read from the memory by the read request is called read data, and correspondingly, read data is the memory access data of the read request. The write request is a memory access request corresponding to the write operation, which is used to request writing data into the memory; the data that needs to be written into the memory by the write request is called write data, and correspondingly, the write data is the memory access data of the write request.

The memory physical layer 130 is responsible for the hardware-level interface and connection between the memory controller 120 and the memory 140, and provides physical connection for data transmission between the memory controller 120 and the memory 140. The memory physical layer 130 has memory channels 131 for transmitting data between the memory controller and the memory, and the number of the memory channels 131 is one or more. By configuring at least one memory channel for one memory controller, one memory controller controls the at least one configured memory channel. In an example, HBM3 technology supports configuring 16 HBM3 channels and setting at least 16 memory controllers for one memory (e.g., one DRAM memory), and one memory controller controls at least one HBM3 channel.

The memory channel includes a zeroth pseudo channel and a first pseudo channel, and the pseudo channel is regarded as a logical path divided from the memory channel, which is used to transmit data between the memory controller and the memory. Referring to Fig. 1, taking that one memory channel 131 is divided into two pseudo channels one memory channel 131 includes one zeroth pseudo channel 0 and one first pseudo channel 1, and the data length of data that one pseudo channel supports to transmit is a first data length (e.g., 32 bytes).

The memory 140 is responsible for temporarily storing data and programs required for the operation of the processor core 110, and the memory 140 is in the form of DRAM(Dynamic Random Access Memory). The technology used in the memory 140 is not limited, including but not limited to HBM3, DDR (Double Data Rate) and so on.

It can be seen that there are memory channels (e.g., HBM3 channels) controlled by the memory controllers (e.g., HBM3 memory controllers) in the memory physical layer, and the memory channel is divided into the zeroth pseudo channel and the first pseudo channel, which have independent data buses but share the command bus. In the case where the memory controller controls the memory channel, the memory controller needs to set control logic to control the pseudo channels divided from the memory channel.

One method for the memory controller to control the pseudo channel is:
on the basis of transmitting the request command of the memory access request and the memory access data through the pseudo channel corresponding to the memory access request, the memory controller can set an independent control logic circuit for each pseudo channel, so as to realize independent control of each pseudo channel through the independent control logic circuit for each pseudo channel. For example, a zeroth control logic circuit for controlling the zeroth pseudo channel and a first control logic circuit for controlling the first pseudo channel are set in the memory controller, so that the zeroth pseudo channel is controlled by the zeroth control logic circuit and the first pseudo channel is controlled by the first control logic circuit.

It should be noted that the request command of the memory access request refers to a request command generated by the memory controller based on the memory access request of the processor core, such as a read command corresponding to the read request and a write command corresponding to the write request, etc. In the case where the memory access request indicates a pseudo channel, the request command of the memory access request and the memory access data are transmitted through the pseudo channel corresponding to the memory access request, which means that the request command of the memory access request and the memory access data are transmitted through the pseudo channel indicated by the memory access request, instead of other pseudo channels. It should be further explained that the pseudo channel corresponding to the memory access request can be indicated by the pseudo channel address of the memory access request (the pseudo channel address of the memory access request can be carried in the physical address of the memory access request). If the pseudo channel address of the memory access request belongs to the zeroth pseudo channel, the memory access request is a memory access request of the zeroth pseudo channel; if the pseudo channel address of the memory access request belongs to the first pseudo channel, the memory access request is a memory access request of the first pseudo channel.

For ease of understanding, taking that the pseudo channel corresponding to the memory access request sent by the processor core is the zeroth pseudo channel as an example, regardless of the data length of the memory access data, the request command of the memory access request sent by the processor core and the memory access data are transmitted through the zeroth pseudo channel, and will not be transmitted through the first pseudo channel; similarly, if the pseudo channel corresponding to the memory access request sent by the processor core is the first pseudo channel, regardless of the data length of the memory access data, the request command of the memory access request sent by the processor core and the memory access data are transmitted through the first pseudo channel, and will not be transmitted through the zeroth pseudo channel.

Based on that the request command of the memory access request and the memory access data are transmitted through the pseudo channel indicated by the memory access request, if the data length of the memory access data is relatively large (for example, the data length of the memory access data is greater than the first data length supported by one pseudo channel), the request command of the memory access request and the memory access data need to be transmitted for multiple times through the pseudo channel corresponding to the memory access request.

For example, taking that one pseudo channel supports 32-byte data transmission as an example, that is, a single data transmission amount of a single pseudo channel in the physical layer of memory is 32 bytes (for example, the data amount of a single transmission supported by one pseudo channel in HBM3 technology is 32 bytes); if the memory access data of the memory access request sent by the processor core is relatively large (64 bytes or more than 64 bytes), for a 64-byte memory access request (a memory access request with 64 bytes of memory access data is referred to as a 64-byte memory access request), after the pseudo channel corresponding to the memory access request is determined, the request command of the memory access request and the memory access data are transmitted through the pseudo channel corresponding to the memory access request for two consecutive times.

For example, in the case where the memory access request is a write request, the memory controller needs to divide the 64-byte write request sent by the processor core into two 32-byte write commands, and one 32-byte write command is used to write 32-byte write data into the memory, so that the memory controller continuously transmits two 32-byte write commands and corresponding write data to the memory through the pseudo channel corresponding to the write request, so as to write 64-byte write data into the memory. For another example, in the case where the memory access request is a read request, the memory controller needs to divide the 64-byte read request sent by the processor core into two 32-byte read commands, and one 32-byte read command is used to read 32-byte read data from the memory, so that the memory controller continuously transmits two 32-byte read commands to the memory through the pseudo channel corresponding to the read request, and continuously obtains two 32-byte read data returned from the memory through the pseudo channel corresponding to the read request, so as to realize reading 64-byte read data from the memory.

It should be noted that when reading or writingHBM3 technology, it is completed by reading or writing 8 times concurrently, and four times per clock cycle, so that in the case where the zeroth pseudo channel and the first pseudo channel have independent data buses but share the command bus, the minimum interval of read or write commands transmitted by the same pseudo channel is 2 clock cycles. That is to say, if a read or write command is transmitted through the zeroth pseudo channel during the current clock cycle, a read or write command cannot be transmitted through the zeroth pseudo channel during the first clock cycle after the current clock cycle, and a read or write command can only be transmitted through the zeroth pseudo channel during at least the second clock cycle after the current clock cycle. Thus, during the first clock cycle after the current clock cycle, a read or write command can be transmitted through the first pseudo channel.

It can be seen that in the above method, the request command of the memory access request and the memory access data are transmitted through the pseudo channel corresponding to the memory access request, rather than in other pseudo channels. Therefore, in the case where a memory channel is divided into the zeroth pseudo channel and the first pseudo channel, the memory controller needs to set an independent control logic circuit for each pseudo channel, so as to realize independent control of each pseudo channel.

However, the memory controller sets independent control logic circuits for various pseudo channels, respectively, which will result in a large number of control logic circuits in the memory controller (for example, the memory controller needs to set double control logic circuits for the zeroth pseudo channel and the first pseudo channel). Therefore, the memory controller has a high overhead problem, and for example, the memory controller has a large occupied area and high power consumption. In addition, if the number of memory channels supported by the memory is large and the number of memory controllers set on the chip is large (for example, HBM3 supports 16 HBM3 channels, one HBM3 channel includes two pseudo channels, and the chip supports setting at least 16 HBM3 memory controllers), in the case where each memory controller needs to independently set control logic circuits for each pseudo channel, it will further increase the overall overhead of the chip on memory controllers when there are a large number of memory channels and memory controllers.

Based on this, the embodiment of the present disclosure provides an improved design solution of the memory controller, so as to reduce the overhead of the memory controller. Different from the method that the request command of the memory access request and the memory access data are transmitted through the pseudo channel corresponding to the memory access request, the embodiment of the present disclosure introduces the means of replicating the request command, and sets that the command transmitted through the zeroth pseudo channel is a non-replicated request command and the command transmitted through the first pseudo channel is a replicated request command, so as to cooperatively control the zeroth pseudo channel and the first pseudo channel. Therefore, the memory controller internally realizes the cooperative control of the zeroth pseudo channel and the first pseudo channel through a set of control logic, thus reducing the number of control logic circuits used by the memory controller and reducing the overhead of the memory controller. It should be noted that in the case where the memory channel is divided into the zeroth pseudo channel and the first pseudo channel (the number of the zeroth pseudo channels can be one or more, and similarly, the number of the first pseudo channels can be one or more), the zeroth pseudo channel and the first pseudo channel can be adjusted by changing the settings in the memory channel, and they are not fixed.

Based on the above concepts, Fig. 2 illustratively shows a diagram of a memory controller provided by an embodiment of the present disclosure. As shown in Fig. 2, the memory controller includes a common control logic circuit 210, a command replicator 220 and a final arbiter 230.

The common control logic circuit 210 is a control logic circuit shared by the zeroth pseudo channel and the first pseudo channel set in the memory controller. In the embodiment of the present disclosure, the common control logic circuit 210 processes the memory access request without distinguishing the pseudo channel address of the memory access request, so as to determine the request command corresponding to the memory access request sent to the final arbiter for final arbitration. As an optional implementation, at least one logic component can be set in the common control logic circuit 210 to process the memory access request.

The common control logic circuit 210 is used to determine the request command corresponding to the memory access request and send the request command to the final arbiter, wherein the memory access request can come from the processor core.

Since the embodiment of the present disclosure introduces the means of replicating the request command, a command replicator 220 is set in the memory controller. The command replicator 220 is configured to replicate, when a command output by the final arbiter is a non-replicated request command and the request command meets a preset replication condition, the request command to obtain a corresponding replicated request command, and to send the replicated request command to the final arbiter.

That is to say, the final arbiter 230 acts as a device in the memory controller that performs final arbitration on commands, and the command sent to the final arbiter 230 to participate in the final arbitration is anyone of the request command provided by the common control logic circuit 210 and the request command replicated by the command replicator 220. For ease of explanation, the embodiment of the present disclosure refers to the request command coming from the common control logic circuit as a non-replicated request command, and the request command coming from the command replicator as a replicated request command.

In the case where the command transmitted through the zeroth pseudo channel is set to be a non-replicated request command and the command transmitted through the first pseudo channel is set to be a replicated request command, the final arbiter 230 is configured to:
conduct final arbitration on a command sent to the final arbiter; if the command passed by the final arbitration is a non-replicated request command (that is, the request command coming from the common control logic circuit is passed by the final arbitration), output the request command and indicate transmission through the zeroth pseudo channel; and during at least one clock cycle after outputting the non-replicated request command, finally arbitrate to pass the corresponding replicated request command (that is, the corresponding replicated request command coming from the command replicator is passed by the final arbitration), output the replicated request command and indicate transmission through the first pseudo channel.

It can be seen that in the embodiment of the present disclosure, the non-replicated request command (coming from the common control logic circuit) output by the final arbiter is transmitted through the zeroth pseudo channel, and for the non-replicated request command output by the final arbiter and meeting the preset replication condition, the command replicator can replicate the request command; and then, the final arbiter outputs the corresponding replicated request command and transmits it through the first pseudo channel during at least one clock cycle after outputting the non-replicated request command. It can be seen that the memory controller cooperatively controls the zeroth pseudo channel and the first pseudo channel in the case where the zeroth pseudo channel is set to transmit the non-replicated request command and the first pseudo channel is set to transmit the replicated request command. That is, the memory controller is provided with a common control logic circuit shared by the zeroth pseudo channel and the first pseudo channel, the request command is replicated by the command replicator, the non-replicated request command is arbitrated by the final arbiter to transmit through the zeroth pseudo channel and the replicated request command is arbitrated by the final arbiter to transmit through the first pseudo channel, so that the common control logic circuit treats the zeroth pseudo channel and the first pseudo channel as a whole channel for control, so as to realize the cooperative control of the zeroth pseudo channel and the first pseudo channel through a set of control logic in the memory controller, reducing the number of control logic circuits used by the memory controller, and reducing the overhead of the memory controller.

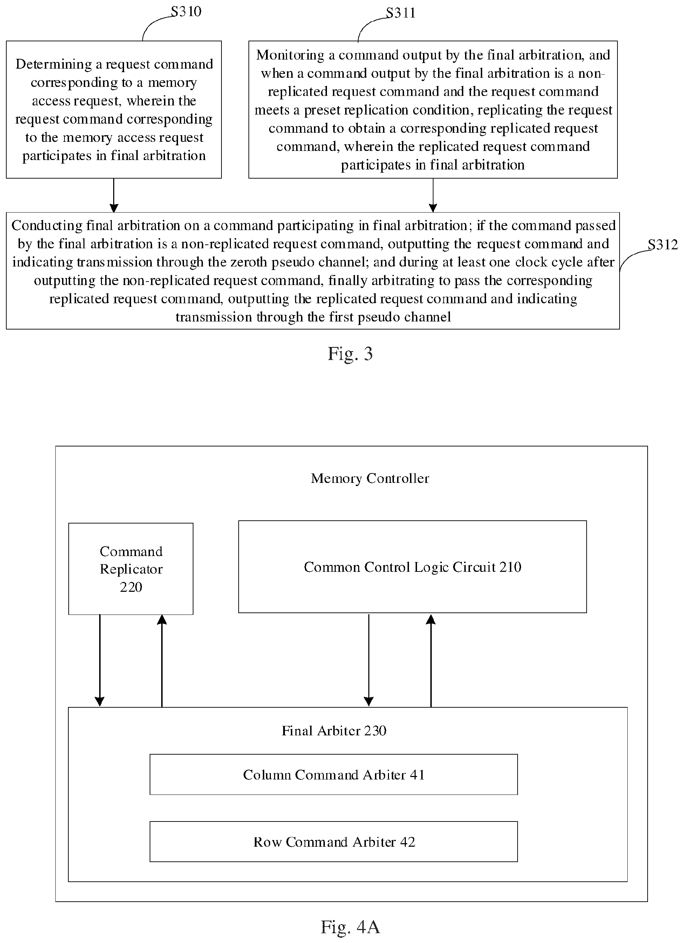

For ease of understanding, based on the structure of the memory controller shown in Fig. 2, Fig. 3 illustratively shows a flowchart of a memory access method provided by an embodiment of the present disclosure. Referring to FigS. 2 and 3, the method includes the following steps.

Step S310: determining a request command corresponding to a memory access request, wherein the request command corresponding to the memory access request participates in final arbitration.

Step S310 is executed by the common control logic circuit.

In an optional implementation, the common control logic circuit can determine a request command corresponding to the memory access request through initial arbitration. For example, the common control logic circuit can determine the command of the memory access request to participate in the initial arbitration at least according to the page hit status of the memory access request, and then determine a command that passes the initial arbitration from the commands that participate in the initial arbitration as the request command corresponding to the memory access request.

It should be noted that the memory can include multiple blocks, and the block can be regarded as a data block with a set size in the memory; for example, the block can be an array formed of rows and columns. The row, as a part of a memory address (e.g., a DRAM address), can correspond to a group of memory cells arranged in rows in the memory, also called a page; for example, the memory cells in the memory are organized together in rows to form a page; the number of memory cells contained in one row of the memory can be fixed (as stipulated by the memory protocol), and the number of memory cells contained in one row can correspond to the size of the row (called the row size). The column, as another part of the memory address (e.g., a DRAM address), can correspond to the location of the memory cell in the row in the case where the memory cells are arranged in rows, so a specific memory cell can be located in the memory through the row and column addresses.

It should be further explained that the block of the memory has a buffer, and the data of the block needs to be read and written through the buffer; the buffer of the block only loads one row of the block at the same time, and therefore, when accessing a certain row of the block (for example, when reading or writing a certain row of the block), if the accessed row is not loaded into the buffer, the data in the buffer needs to be written back to the originally loaded line through a pre-charge operation, and the accessed row needs to be loaded into the buffer through an activity operation, before data reading and writing can be performed on the accessed row. Therefore, based on the situation of the loaded row of the buffer of the block, the page hit statuses of the memory access request can be divided into page hit, page miss and page conflict, etc.

As an optional implementation, the embodiment of the present disclosure can generate different commands to participate in initial arbitration for the memory access request based on different page hit statuses, such as page hit, page miss and page conflict, etc.; and then, a command that passes the initial arbitration is determined from the commands that participated in the initial arbitration as the request command corresponding to the memory access request, and sent to the final arbiter for final arbitration.

Step S311: monitoring a command output by the final arbitration, and when a command output by the final arbitration is a non-replicated request command and the request command meets a preset replication condition, replicating the request command to obtain a corresponding replicated request command, wherein the replicated request command participates in final arbitration.

Step S311 is executed by the command replicator.

In an optional implementation, based on that the block of the memory is an array formed of rows and columns, the request commands can be divided into row commands for controlling rows and column commands for performing memory access operations on columns.

It should be noted that the two pseudo channels (the zeroth pseudo channel and the first pseudo channel) divided from the memory channel can share the command bus and the address bus, but have independent data buses. Based on that the block of the memory is organized in rows and columns, and the command bus can include a row command bus (Row Command Interface) and a column command bus (Column Command Interface). The row command bus can transmit a row command, and the row command refers to any command other than the read command and the write command; the column command bus can transmit a column command, and the column command is only for the read command and the write command, such as the CAS (Column Address Strobe) command for reading data and the CAS (Column Address Strobe) command for writing data.

As an optional implementation, the column command can be used to perform a memory access operation (such as a read operation or write operation) on a column in the row pointed by the memory access request , including but not limited to any of the following: a column command of the read operation (i.e., a read command) and a column command of a write operation (i.e., a write command). The column command, also called a column address strobe command, is used to select a column in a row, so as to read data from or write data into the selected column. For example, the column address strobe command can select a column in a row of a block, so as to read data from or write data into a specified starting column and subsequent columns in a concurrent manner.

As an optional implementation, the row command can be regarded as any command other than the column command such as the read command and the write command, etc., and the row command can be used to control at least the block where the row pointed by the memory access request is located, including but not limited to any of the following: a row activity (abbreviated as ACT) command, a per bank pre-charge (abbreviated as PCHGpb) command, a refresh command, an all bank refresh management (RFMab) command, a per bank refresh management (RFMpb) command, etc.

It should be noted that the row activity command, also called as a row address strobe (RAS) command, is used to load a row into the buffer of the block. The pre-charge command is used to pre-charge the block corresponding to the row; the pre-charge command can be divided into a per bank pre-charge (abbreviated as PCHGpb) command and an all banks pre-charge (abbreviated as PCHGab) command; the PCHGpb command can be performing a pre-charge operation on a single block of the memory, and the PCHGab command can be performing a pre-charge operation on all blocks of the memory. The refresh command is used to refresh the memory to prevent data loss of the memory; for example, for DRAM and other types of memory, due to the existence of charge leakage, periodic refresh is required to prevent data loss of the memory. The refresh command can be divided into an all banks refresh (abbreviated as REFab) command and a per bank refresh (abbreviated as REFpb) command; the REFab command is a command to control all blocks in the memory to refresh at the same time, and the REFpb command is a command to control the memory to refresh individually by block, and for example, each block in the memory receives the refresh command independently; Compared with the REFab command, the REFpb command allows a certain block or a certain part of blocks in the memory to be refreshed more flexibly.

Based on that the request command is divided into a row command and a column command, as an optional implementation, because the row command controls the block where the row pointed by the memory access request is located, which involves affecting the page status of the block, in order to maintain the consistency of the page status of the zeroth pseudo channel and the first pseudo channel, the embodiment of the present disclosure can replicate the non-replicated row command output by the final arbiter (that is, replicate the row command output by the final arbiter and coming from the common control logic circuit). That is to say, when the command output by the final arbiter is a non-replicated row command, the embodiment of the present disclosure can replicate the row command to obtain a corresponding replicated row command, so as to ensure that the zeroth pseudo channel (transmitting the non-replicated row command) and the first pseudo channel (transmitting the replicated row command) can transmit the same row command, and at the same time, if the column command output by the final arbiter originates from a memory access request with the first data length (e.g., 32 bytes), the column command does not carry an automatic pre-charge instruction, thus maintaining the consistency of the page status of the zeroth pseudo channel and the first pseudo channel.

As an optional implementation, because the column command is performing a memory access operation to read or write a column in the row pointed by the memory access request, and the data length of data that a single pseudo channel supports to transmit is the first data length (e.g., 32 bytes), if the command output by the final arbiter is a non-replicated column command, and the data length of the memory access request corresponding to the column command is the first data length (e.g., 32 bytes), and the pseudo channel indicated by the memory access request is the zeroth pseudo channel, then because the zeroth pseudo channel itself is set to transmit a non-replicated request command, the embodiment of the present application does not need to replicate the column command. If the command output by the final arbiter is a non-replicated column command, and the data length of the memory access request corresponding to the column command is the first data length (e.g., 32 bytes), and the pseudo channel indicated by the memory access request is the first pseudo channel, then because the first pseudo channel is set to transmit a replicated request command instead of a non-copied request commands the column command output by the final arbiter needs to be discarded, and at the same time, the command replicator needs to replicate the column command to transmit the replicated column command through the first pseudo channel, thus meeting the memory access requirement of the memory access request with the first data length (e.g., 32 bytes).

In a further optional implementation, in order to distinguish the column command output by the final arbiter that needs to be discarded and the column command output by the final arbiter that needs to be actually sent to memory, the final arbiter can mark the output column commands with true or false label information. If the request command output by the final arbiter is a non-replicated column command, and the data length of the memory access request corresponding to the column command is the first data length, and the pseudo channel indicated by the memory access request corresponding to the column command is the first pseudo channel (which is inconsistent with the setting that the first pseudo channel transmits the replicated request command), the final arbiter can mark false label information when the column command is output, so that the column command is not actually sent to the memory, and instead, the corresponding replicated column command marked as true is sent to the memory to meet the memory access requirement of the memory access request.

Except marking the output column commands in the above cases as false, the final arbiter can mark the output column commands in other cases as true. Based on this, the embodiment of the present disclosure can set a condition for marking the column command as false, so that when the request command output by the final arbiter is a column command and the condition is met, the output column command is marked as false; and the condition can include that the column command output by the final arbiter is a non-replicated column command, the data length of the memory access request corresponding to the column command is the first data length, and the pseudo channel indicated by the memory access request corresponding to the column command is the first pseudo channel. Accordingly, when the request command output by the final arbiter is a column command and the condition is not met, the output column command is marked as true.

For example, if the request command output by the final arbiter is a non-replicated column command, and the data length of the memory access request corresponding to the column command is the first data length, and the pseudo channel indicated by the memory access request corresponding to the column command is the zeroth pseudo channel (which is consistent with the setting that the zeroth pseudo channel transmits the non-replicated request command), the final arbiter can mark true label information when the column command is output, so that the column command can be actually sent to the memory. For example, if the final arbiter outputs a non-replicated column command, and the data length of the memory access request corresponding to the column command is 32 bytes, and the pseudo channel indicated by the memory access request is the zeroth pseudo channel, the final arbiter can mark true label information when the column command is output.

It should be noted that in an optional implementation, if the column command output by the final arbiter originates from a memory access request with the first data length, the column command does not carry an automatic pre-charge instruction; for example, the read command or write command output by the final arbiter is triggered by a 32-byte memory access request, the read command or write command cannot carry an automatic pre-charge instruction. If the column command output by the final arbiter originates from a memory access request with the second data length, the column command does or does not carry an automatic pre-charge instruction; for example, the read command or write command output by the final arbiter is triggered by a 64-byte memory access request, the read command or write command may or may not carry an automatic pre-charge instruction.

It should be noted that if the request command output by the final arbiter is a non-replicated column command, and the data length of the memory access request corresponding to the column command is the second data length (e.g., 64 bytes), the pseudo channel indicated by the memory access request will not be considered (that is, the pseudo channel address of the memory access request will not be considered); the final arbiter can firstly output a column command indicating transmission through the zeroth pseudo channel and marked as true, and the column command is replicated through the command replicator, so that the final arbiter can then output a replicated column command indicating transmission through the first pseudo channel and marked as true, so as to meet the memory access requirement of the memory access request with the second data length. That is to say, when the command output by the final arbiter is a non-replicated request command, and the request command is a column command marked as true and originating from a memory access request with the second data length, the command replicator needs to replicate the column command, so as to transmit the non-replicated column command through the zeroth pseudo channel (the zeroth pseudo channel supports transmission of data of the first data length) and transmit the corresponding replicated column command through the first pseudo channel (the first pseudo channel supports transmission of data of the first data length), thus meeting the memory access requirement of the memory access request with the second data length.

Based on the above description, if the command output by the final arbiter is a non-replicated column command (that is, the column command output by the final arbiter comes from the common control logic circuit), and the data length of the memory access request corresponding to the column command is the first data length, and the pseudo channel indicated by the memory access request corresponding to the column command is the zeroth pseudo channel, the column command can be regarded as a column command for performing a read operation or write operation corresponding to the memory access request with the first data length, and the column command is transmitted through the zeroth pseudo channel which transmits a non-replicated request command itself, so the column command may not be replicated. Therefore, except the above cases, the command replicator can replicate the command output by the final arbiter. That is to say, when the command output by the final arbiter is a non-replicated request command and is a column command other than a column command marked as true and originating from a memory access request with the first data length, the embodiment of the present disclosure can replicate the command output by the final arbiter to obtain a corresponding replicated request command. For example, when the command output by the final arbiter is a non-replicated request command, and is a command other than a read command or a write command marked as true and originating from a 32-byte memory access request, the command replicator can replicate the request command output by the final arbiter to obtain a corresponding replicated request command.

Step S312: conducting final arbitration on a command participating in final arbitration; if the command passed by the final arbitration is a non-replicated request command, outputting the request command and indicating transmission through the zeroth pseudo channel; and during at least one clock cycle after outputting the non-replicated request command, finally arbitrating to pass the corresponding replicated request command, outputting the replicated request command and indicating transmission through the first pseudo channel.

Step S312 is executed by the final arbiter. In a further optional implementation, the replicated command output by the final arbiter can be deleted from the command replicator; for example, the command replicator can save the replicated command sent to the final arbiter to participate in the final arbitration, and the command replicator can delete the replicated command output by the final arbiter from the saved.

As an optional implementation, based on that the request command is divided into a row command and a column command, Fig. 4A illustratively shows another diagram of a memory controller provided by an embodiment of the present disclosure. Referring to Figs. 2 and 4A, the final arbiter 230 in the memory controller can include a column command arbiter 41 and a row command arbiter 42. The column command arbiter can perform final arbitration on the column command, and the row command arbiter can perform final arbitration on the row command.

In the following, the optional implementation of the final arbiter is introduced from the perspective of the final arbitration scheduling of the column command and the final arbitration scheduling of the row command.

As an optional implementation, the column command arbiter can be configured to: conduct final arbitration on a column command sent to the final arbiter; if the column command passed by the final arbitration is a non-replicated column command, output the column command and indicate transmission through the zeroth pseudo channel; and if the output non-replicated column command has a corresponding replicated column command, finally arbitrate to pass the corresponding replicated column command during at least one clock cycle after outputting the non-replicated column command, and output the replicated column command and indicate transmission through the first pseudo channel.

As an optional implementation, the non-replicated column command output by the column command arbiter may fall into the following cases:
Case 1: The non-replicated column command originates from a memory access request with the first data length (that is, the data length of the memory access request corresponding to the non-replicated column command is the first data length), and the pseudo channel indicated by the memory access request is the zeroth pseudo channel (that is, the pseudo channel address of the memory access request belongs to the zeroth pseudo channel); for example, the non-replicated column command originates from a 32-byte memory access request, and the pseudo channel address carried by the physical address of the memory access request belongs to the zeroth pseudo channel;
Case 2: The non-replicated column command originates from a memory access request with the first data length, and the pseudo channel indicated by the memory access request is the first pseudo channel; for example, the non-replicated column command originates from a 32-byte memory access request, and the pseudo channel address carried by the physical address of the memory access request belongs to the first pseudo channel;
Case 3: The non-replicated column command originates from a memory access request with the second data length, and the pseudo channel indicated by the memory access request is the zeroth pseudo channel or the first pseudo channel; for example, the non-replicated column command originates from a 64-byte memory access request, and the pseudo channel address carried by the physical address of the memory access request belongs to the zeroth pseudo channel or the first pseudo channel; it should be noted that when the data length of the memory access request is the second data length, the embodiment of the present disclosure does not take into account the role played by the pseudo channel address of the memory access request, so when the data length of the memory access request is the second data length, the memory access request of the zeroth pseudo channel or the first pseudo channel is integrated into Case 3.

As an optional implementation, the command output by the final arbiter is the non-replicated request command and is a column command other than a column command marked as true and originating from a memory access request with the first data length, the command replicator replicates the request command; that the final arbiter outputs a non-replicated request command marked as true and originated from the memory access request with the first data length corresponds to the above-mentioned Case 1, so the embodiment of the present disclosure does not perform command replication in Case 1, but performs command replication in Case 2 and Case 3. That is to say, when the column command arbiter outputs a non-replicated column command and the column command is a column command other than a column command marked as true and originated from the memory access request with the first data length (that is, the column command is not marked as true, and the data length of the memory access request corresponding to the column command is not the first data length), the column command is replicated to obtain a corresponding replicated column command.

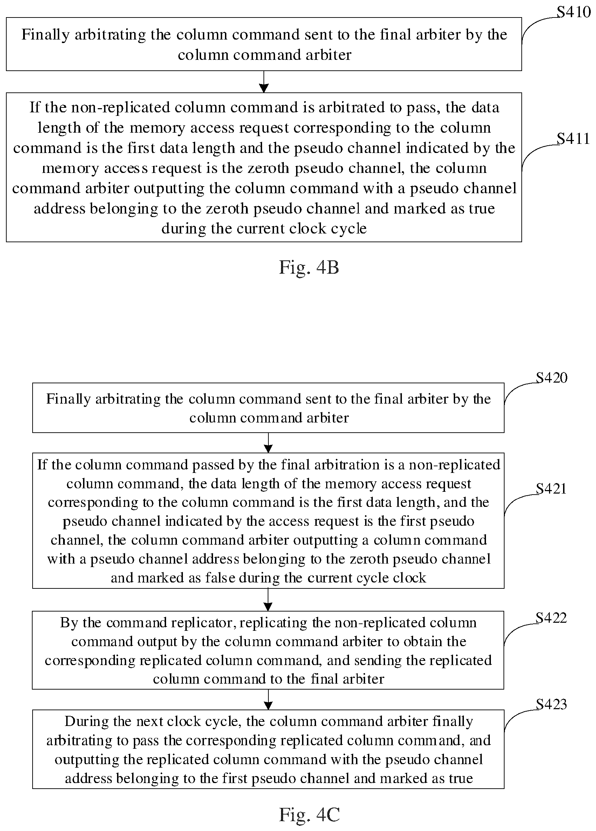

In an optional implementation, for Case 1, Fig. 4B illustratively shows another flowchart of a memory access method provided by an embodiment of the present disclosure. Referring to Fig. 4B, the method flow can be executed by the column command arbiter, and the method flow can include the following steps.

Step S410: finally arbitrating the column command sent to the final arbiter by the column command arbiter.

The column command sent to the final arbiter may be a non-replicated column command (coming from the common control logic circuit) or a replicated column command (coming from the command replicator). In an optional implementation, the column command arbiter can finally arbitrate the column command sent to the final arbiter according to a certain arbitration strategy; for example, the column command sent to the final arbiter are finally arbitrated based on the arbitration strategy of command priority and order of sending. In an optional implementation, the replicated request command must have a corresponding non-replicated request command that has been output by the final arbiter, so the replicated request command can have the highest priority in the final arbitration, so as to ensure that after the non-replicated request command is transmitted through the zeroth pseudo channel, the corresponding replicated request command can be transmitted through the first pseudo channel immediately, thus ensuring the status consistency between the zeroth pseudo channel and the first pseudo channel.

Step S411: if the non-replicated column command is arbitrated to pass, the data length of the memory access request corresponding to the column command is the first data length and the pseudo channel indicated by the memory access request is the zeroth pseudo channel, the column command arbiter outputting the column command with a pseudo channel address belonging to the zeroth pseudo channel and marked as true during the current clock cycle.

In an optional implementation, if the column command passed by arbitration of the column command arbiter is a non-replicated column command and the data length of the memory access request corresponding to the non-replicated column command arbitrated is 32 bytes, when the pseudo channel address of the memory access request belongs to the zeroth pseudo channel (the zeroth pseudo channel is set to transmit the non-replicated column command), the column command arbiter can output one column command with the pseudo channel address belonging to the zeroth pseudo channel and marked as true during the current clock cycle (this column command does not carry an automatic pre-charge instruction)

It should be noted that when the non-replicated column command passed by arbitration of the column command arbiter originates from a memory access request with the first data length (e.g., 32 bytes) and the pseudo channel address of the memory access request belongs to the zeroth pseudo channel, because the column command arbiter outputs the column command with the pseudo channel address belonging to the zeroth pseudo channel and marked as true during the current cycle, the column command corresponding to the memory access request with the first data length (e.g, 32 bytes) can be sent to the memory through the zeroth pseudo channel, thereby transmitting the memory access data with the first data length (e.g, 32 bytes) to meet the memory access requirement of the memory access request with the first data length (e.g, 32 bytes); Therefore, there is no need for the command replicator to replicate the corresponding column command, and there is no need for the first pseudo channel to transmit the corresponding replicated column command.

Based on this, the embodiment of the present disclosure can set that the final arbiter is occupied by the command replicator during the next clock cycle, but the final arbiter does not output a column command to ensure the correctness of data. That is to say, when the column command arbiter outputs a non-replicated column command, and the data length of the memory access request corresponding to the column command is the first data length, and the pseudo channel indicated by the memory access request is the zeroth pseudo channel, the embodiment of the present disclosure can cause the final arbiter to be occupied by the command replicator during the next clock cycle, but the final arbiter will not output any column command during the next clock cycle, so as to ensure that the first pseudo channel will not transmit the replicated column command, thereby ensuring the correctness of data. It can be understood that if the column command arbiter outputs a corresponding replicated column command and indicates transmission through the first pseudo channel during the next clock cycle, when the column command is a column command for a read operation, it will lead to repeated reading of the read data, which will increase meaningless power consumption; and in addition, when the column command is a column command for a write operation, it may lead to the destruction of the data written into the memory and result in a write error.

As an example, when the column command that passes the arbitration comes from the common control logic circuit, and the data length of the memory access request corresponding to the column command is 32 bytes, and the pseudo channel address of the memory access request belongs to the zeroth pseudo channel, the column command arbiter can output one column command with the pseudo channel address belonging to the zeroth pseudo channel and marked as true during the current clock cycle (this column command does not carry the an automatic pre-charge instruction); moreover, during the next clock cycle, the command replicator can occupy the final arbiter, but the final arbiter (the column command arbiter of the final arbiter) will not output any column command.

**In** an optional implementation, for Case 2, Fig. 4C illustratively shows further another flowchart of a memory access method provided by an embodiment of the present disclosure. Referring to Fig. 4C, the method flowchart can include the following steps.

Step S420, finally arbitrating the column command sent to the final arbiter by the column command arbiter.

Step S421, if the column command passed by the final arbitration is a non-replicated column command, the data length of the memory access request corresponding to the column command is the first data length, and the pseudo channel indicated by the access request is the first pseudo channel, the column command arbiter outputting a column command with a pseudo channel address belonging to the zeroth pseudo channel and marked as false during the current cycle clock.

It should be noted that the column command marked as true can be actually sent to the memory needs to be discarded (that is, not sent to the memory) after being output by the final arbiter.

Step S422, by the command replicator, replicating the non-replicated column command output by the column command arbiter to obtain the corresponding replicated column command, and sending the replicated column command to the final arbiter.

When the non-replicated column command passed the arbitration of the column command arbiter originates from a memory access request with the first data length (e.g., 32 bytes) and the pseudo channel address of the memory access request belongs to the first pseudo channel, because the non-replicated column command passed the arbitration needs to be transmitted through the set zeroth pseudo channel, which is not consistent with the first pseudo channel indicated by the memory access request, the column command arbiter can output a column command with the pseudo channel address belonging to the zeroth pseudo channel and marked as false during the current cycle clock, so that the non-replicated column command output by the column command arbiter can be discarded based on the false label information; at the same time, the command replicator can replicate the non-replicated column command output by the column command arbiter, and send the corresponding replicated column command to the final arbiter, so that the final arbiter can output the corresponding replicated column command marked as true during the next clock cycle and indicate transmission through the first pseudo channel, so as to meet the memory access requirement of the memory access request with the first data length.

Step S423, during the next clock cycle, the column command arbiter finally arbitrating to pass the corresponding replicated column command, and outputting the replicated column command with the pseudo channel address belonging to the first pseudo channel and marked as true.

For example, when the column command passed by the final arbitration comes from the common control logic circuit, the data length of the memory access request corresponding to the column command is 32 bytes, and the pseudo channel address of the memory access request belongs to the first pseudo channel, the column command arbiter can output a column command with a pseudo channel address belonging to the zeroth pseudo channel and marked as false during the current clock cycle; therefore, the command replicator can replicate the column command output by the column command arbiter and send the corresponding replicated column command to the column command arbiter; furthermore, during the next clock cycle, the column command arbiter can arbitrate to pass the corresponding replicated column command coming from the command replicator, and output the replicated column command with the pseudo channel address belonging to the first pseudo channel and marked as true (this column command does not carry an automatic pre-charge instruction), so as to meet the memory access requirement of 32-byte data length.

It can be seen that for a 32-byte memory access request, the pseudo channel address of the memory access request can be used in the embodiment of the present disclosure, that is, the pseudo channel address of the 32-byte memory access request determines the pseudo channel that actually sends the column command. At the same time, based on the principle set by the embodiment of the present disclosure that the zeroth pseudo channel transmits the non-replicated request command and the first pseudo channel transmits the replicated request command, when the column command arbiter outputs the non-replicated column command for the 32-byte memory access request, if the pseudo channel address indicated by the memory access request belongs to the first pseudo channel (for example, when the common control logic circuit provides the column command to the column command arbiter, the pseudo channel address of the provided column command belongs to the first pseudo channel), then based on the principle that the non-replicated column commands are transmitted through the zeroth pseudo channel, the column command arbiter can output the non-replicated column command with a pseudo channel belonging to the zeroth pseudo channel but marked as false, so as to indicate that the output column command is invalid and needs to be discarded. And then, the corresponding column command with a pseudo channel belonging to the first pseudo channel but marked as true is output, so as to ensure the memory access requirement of the memory access request, and to ensure that the zero pseudo channel and the first pseudo channel transmit the commands according to the setting.

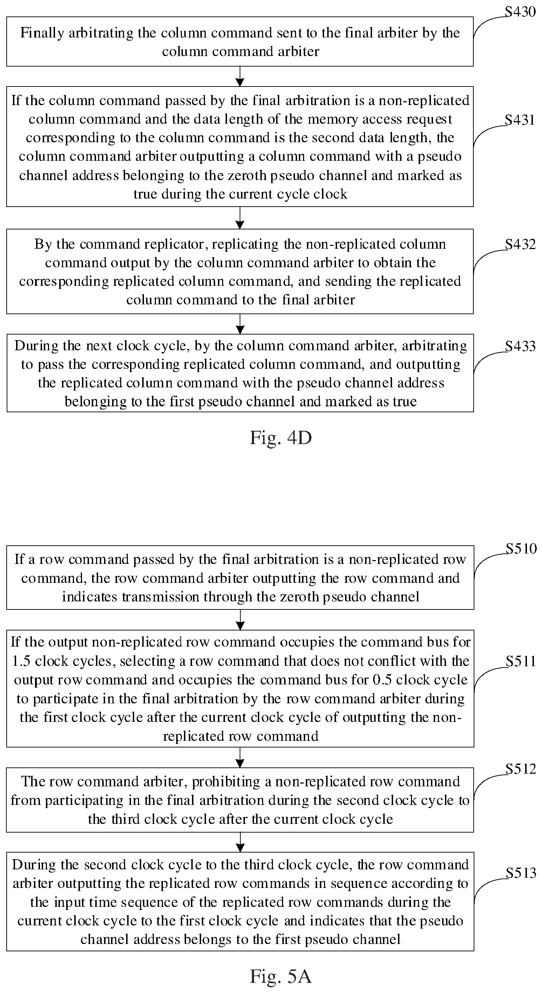

In an optional implementation, for Case 3, Fig. 4D illustratively shows still another flowchart of a memory access method provided by an embodiment of the present disclosure. Referring to Fig. 4D, the method flowchart can include the following steps.

Step S430: finally arbitrating the column command sent to the final arbiter by the column command arbiter.

Step S431: if the column command passed by the final arbitration is a non-replicated column command and the data length of the memory access request corresponding to the column command is the second data length, the column command arbiter outputting a column command with a pseudo channel address belonging to the zeroth pseudo channel and marked as true during the current cycle clock.

Step S432: by the command replicator, replicating the non-replicated column command output by the column command arbiter to obtain the corresponding replicated column command, and sending the replicated column command to the final arbiter.

When the non-replicated column command passed the arbitration of the column command arbiter originates from a memory access request with the second data length (e.g., 64 bytes), the embodiment of the present disclosure does not take into account the pseudo channel address indicated by the memory access request, but based on the principle that the zeroth pseudo channel transmits the non-replicated request command and the first pseudo channel transmits the replicated request command, a column command with the pseudo channel address belonging to the zeroth pseudo channel and marked as true during the current cycle clock, and the column command output by the column command arbiter is replicated by the command replicator. Then, the column command arbiter can output the corresponding replicated column command (with a pseudo channel address belonging to the first pseudo channel and marked as true) of the command replicator during the next clock cycle, so that the column command arbiter outputs the column command with the pseudo channel address belonging to the zeroth pseudo channel and marked as true during the current clock cycle, and outputs the column command with the pseudo channel address belonging to the first pseudo channel and marked as true during the next clock cycle, thus meeting the memory access requirement of the memory access request with the second data length.

Step S433, during the next clock cycle, by the column command arbiter, arbitrating to pass the corresponding replicated column command, and outputting the replicated column command with the pseudo channel address belonging to the first pseudo channel and marked as true.

As an optional implementation, the column command arbiter can prohibit the column command coming from the common control logic circuit from participating in the final arbitration during the next clock cycle (that is, prohibit the non-replicated column command from participating in the final arbitration).

For example, when the column command that passes the arbitration comes from the common control logic circuit and the data length of the memory access request corresponding to the column command is 64 bytes, the column command arbiter does not take into account the pseudo channel address indicated by the memory access request, but outputs a column command with the pseudo channel address belonging to the zeroth pseudo channel and marked as true during the current clock cycle (this command can carry an automatic pre-charge instruction); the command replicator can replicate the column command output by the column command arbiter and send the corresponding replicated column command to the column command arbiter; and then, during the next clock cycle, the column command arbiter can prohibit the column command coming from the common control logic circuit from participating in the final arbitration, and arbitrate to pass the corresponding replicated column command coming from the command replicator, and output one replicated column command with the pseudo channel address belonging to the first pseudo channel and marked as true (this column command can carry an automatic pre-charge instruction, which is consistent with the column command transmitted through the zeroth pseudo channel and output by the column command arbiter during the previous clock cycle), so as to meet the memory access requirement of 64-byte data length.

Based on the arbitration scheduling scheme of column commands provided by the embodiment of the present disclosure, as an example, an example of processing a column command (a column command for a read operation or a column command for a write operation) can be as follows:
when the column command arbiter arbitrates to pass the column command coming from the common control logic circuit, if the data length of the memory access request corresponding to the column command is 64 bytes, the column command arbiter can output a column command with a pseudo channel address belonging to the zeroth pseudo channel and marked as true during the current clock cycle; the command replicator can replicate the column command output by the column command arbiter and send the replicated column command to the column command arbiter; and then, during the next clock cycle, the column command arbiter arbitrates to pass the corresponding replicated column command of the command replicator, and outputs a replicated column command with a pseudo channel address belonging to the first pseudo channel and marked as true;
when the column command arbiter arbitrates to pass the column command coming from the common control logic circuit, if the data length of the memory access request corresponding to the column command is 32 bytes, when the pseudo channel address of the memory access request belongs to the zeroth pseudo channel, the column command arbiter can output column command with a pseudo channel address belonging to the zeroth pseudo channel and marked as true during the current clock cycle; and the command replicator does not replicate the column command output by the column command arbiter, and occupies the final arbiter during the next clock cycle, but the final arbiter will not output any column command during the next clock cycle;
when the column command arbiter arbitrates to pass the column command coming from the common control logic circuit, if the data length of the memory access request corresponding to the column command is 32 bytes, when the pseudo channel address of the memory access request belongs to the first pseudo channel, the column command arbiter can output a column command with a pseudo channel address belonging to the zeroth pseudo channel and marked as false during the current clock cycle; the command replicator can replicate the column command output by the column command arbiter and send the replicated column command to the column command arbiter; and then, during the next clock cycle, the column command arbiter arbitrates to pass the corresponding replicated column command of the command replicator, and outputs a replicated column command with a pseudo channel address belonging to the first pseudo channel and marked as true.

The arbitration scheduling process of the row command is introduced below. As an optional implementation, the row command arbiter can be configured to: conduct final arbitration on a row command sent to the final arbiter; if the row command passed by the final arbitration is a non-replicated row command, output the row command and indicate transmission through the zeroth pseudo channel; and during at least one clock cycle after outputting the non-replicated row command, output a corresponding replicated row command and indicate transmission through the first pseudo channel.

It should be noted that, because the row command controls the pre-charge, row activity, etc., of the block where the row is located, and does not involve reading data from and writing data into the column, in order to ensure the consistency of the page status of the blocks of the zeroth pseudo channel and the first pseudo channel, the embodiment of the present disclosure can set that the zeroth pseudo channel and the first pseudo channel need to transmit the same row command, that is to say, the non-replicated row command transmitted through the zeroth pseudo channel needs to be replicated, and the corresponding replicated row command needs to be transmitted through the first pseudo channel, so as to ensure the consistency of the page status of the zeroth pseudo channel and the first pseudo channel. Therefore, any non-replicated row command output by the row command arbiter (that is, any row command coming from the common control logic circuit and output by the row command arbiter) can be replicated by the command replicator to obtain the corresponding replicated row command.

It should be noted that because the non-replicated row command needs to be transmitted through the zeroth pseudo channel and the corresponding replicated row command needs to be transmitted through the first pseudo channel, there is no case that the row commands (the non-replicated row command and the corresponding replicated row command) need to be discarded. Therefore, in an optional implementation, the embodiment of the present disclosure may not mark the row commands (the non-replicated row command and the corresponding replicated row command) output by the row command arbiter with true or false label information.

In an optional implementation, if the row command that passes the final arbitration is a non-replicated row command, the row command arbiter can select, according to the clock cycle that the output non-replicated row command occupies a command bus, a row command participating in the final arbitration during at least one clock cycle after outputting the non-replicated row command (for example, select a row command participating in the final arbitration from the non-replicated row command sent from the common control logic circuit and the replicated row command sent from the command replicator), and output the replicated row command and indicate transmission through the first pseudo channel.

As an optional implementation, different types of commands may occupy the command bus for different clock cycles. For example, for technologies such as HBM3 or the like, the clock cycles of commands occupying the command bus can be divided into 0.5 clock cycle, 1 clock cycle and 1.5 clock cycles. Based on this, in an optional implementation, the clock cycle that the non-replicated row command output by the row command arbiter occupies the command bus may be 1.5 clock cycles, 1 clock cycle or 0.5 clock cycle. In the following, the arbitration scheduling methods of row commands under different clock cycles are described, respectively.

As an optional implementation, Fig. 5A illustratively shows yet another flowchart of a memory access method provided by an embodiment of the present disclosure, and the method flow can be executed by the row command arbiter. Referring to Fig. 5A, the method flow can include the following steps.

Step S510: if a row command passed by the final arbitration is a non-replicated row command, the row command arbiter outputting the row command and indicates transmission through the zeroth pseudo channel.

Accordingly, the command replicator can replicate the non-replicated row command output by the row command arbiter (that is, the row command coming from the common control logic circuit and output by the row command arbiter) to obtain a corresponding replicated row command, and send the replicated row command to the row command arbiter.

Step S511: if the output non-replicated row command occupies the command bus for 1.5 clock cycles, selecting a row command that does not conflict with the output row command and occupies the command bus for 0.5 clock cycle to participate in the final arbitration by the row command arbiter during the first clock cycle after the current clock cycle of outputting the non-replicated row command.

In a further optional implementation, the selected row command that occupies the command bus for 0.5 clock cycle can be output by the row command arbiter during 0.5 clock cycle after the first clock cycle, the output row command can be replicated by the command replicator, and the corresponding replicated row command can be output by the row command arbiter during 0.5 clock cycle after the third clock cycle.

Step S512: the row command arbiter prohibiting a non-replicated row command from participating in the final arbitration during the second clock cycle to the third clock cycle after the current clock cycle.

In the embodiment of the present disclosure, the clock cycle during which the row command arbiter outputs the non-replicated row command is taken as the current clock cycle (set as T0); if the non-replicated row command output by the row command arbiter at T0 occupies the command bus for 1.5 clock cycles, then during the first clock cycle after T0 (i.e., the next clock cycle after the current clock cycle, set as T1), the row command selected by the row command arbiter to participate in the final arbitration should meet the following conditions: it does not conflict with the non-replicated row command output at T0, and occupies the command bus for 0.5 clock cycle, so that the row command that participates in the final arbitration at T1 corresponds to that the non-replicated row command output at T0 occupies the command bus for 1.5 clock cycles.

Furthermore, during the second clock cycle to the third clock cycle after T0 (the second clock cycle after T0 is set as T2, and the third clock cycle after T0 is set as T3), the row command arbiter prohibits the non-replicated row command from participating in the final arbitration, that is, the row command arbiter prohibits the row command not coming from the command replicator from participating in the arbitration during T2 to T3 (the row command not coming from the command replicator can be regarded as the row command coming from the common control logic circuit).

Step S513: during the second clock cycle to the third clock cycle, the row command arbiter outputting the replicated row commands in sequence according to the input time sequence of the replicated row commands during the current clock cycle to the first clock cycle and indicates that the pseudo channel address belongs to the first pseudo channel.

Because the non-replicated row command output by the row command arbiter at T0 occupies the command bus for 1.5 clock cycles, the row command arbiter does not output a row command at T1 (the row command output at T0 still occupies the command bus at T1), and needs to wait so as to output a row command at T2; and the row command output by the row command arbiter during T2 to T3 is the replicated row command sent to the row command arbiter by the command replicator during T0 to T1. Based on this, as an optional implementation, the row command arbiter outputs the replicated row commands in sequence during T2 to T3 according to the input time sequence of the replicated row commands into the row command arbiter during T0 to T1, and indicates the output replicated row commands to be transmitted through the first pseudo channel.

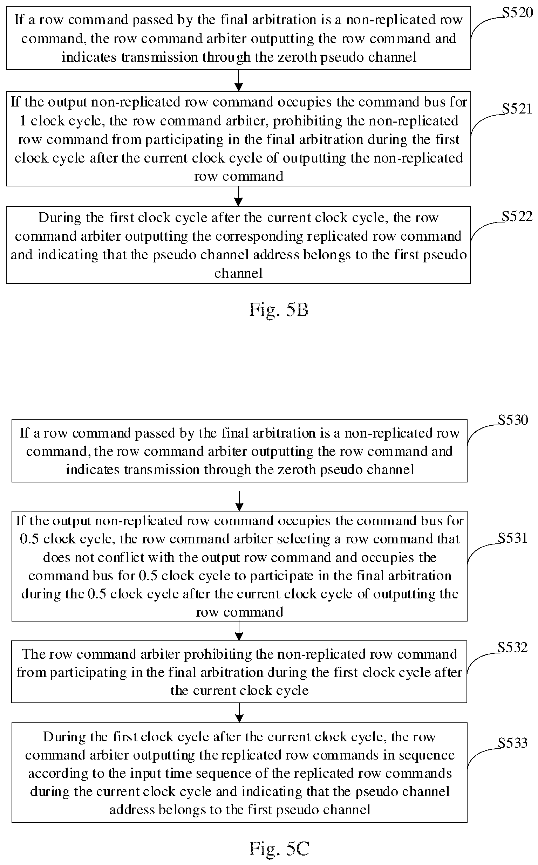

As an optional implementation, Fig. 5B illustratively shows yet another flowchart of a memory access method provided by an embodiment of the present disclosure, and the method flow can be executed by the row command arbiter. Referring to Fig. 5B, the method flow can include the following steps.

Step S520: if a row command passed by the final arbitration is a non-replicated row command, the row command arbiter outputting the row command and indicates transmission through the zeroth pseudo channel.

Step S521: if the output non-replicated row command occupies the command bus for 1 clock cycle, the row command arbiter prohibiting the non-replicated row command from participating in the final arbitration during the first clock cycle after the current clock cycle of outputting the non-replicated row command.

Step S522: during the first clock cycle after the current clock cycle, the row command arbiter outputting the corresponding replicated row command and indicating that the pseudo channel address belongs to the first pseudo channel.

Because the non-replicated row command output by the row command arbiter at T0 occupies the command bus for 1 clock cycle, the row command arbiter can output the corresponding replicated row command at T1, so as to keep the consistency of page status of the zeroth pseudo channel and the first pseudo channel. Based on this, during the first clock cycle after T0 (i.e., T1), the row command arbiter should prohibit the non-replicated row command from participating in the final arbitration, that is, the row command arbiter conducts the final arbitration on the row command coming from the command replicator at T1, and what passes the final arbitration is the replicated row command corresponding to the row command output at T0; furthermore, the row command arbiter outputs the corresponding replicated row command at T1 and indicates that the pseudo channel address belongs to the first pseudo channel.

As an optional implementation, Fig. 5C illustratively shows yet another flowchart of a memory access method provided by an embodiment of the present disclosure, and the method flow can be executed by the row command arbiter. Referring to Fig. 5C, the method flow can include the following steps.

Step S530: if a row command passed by the final arbitration is a non-replicated row command, the row command arbiter outputting the row command and indicates transmission through the zeroth pseudo channel.

Step S531: if the output non-replicated row command occupies the command bus for 0.5 clock cycle, the row command arbiter selecting a row command that does not conflict with the output row command and occupies the command bus for 0.5 clock cycle to participate in the final arbitration during the 0.5 clock cycle after the current clock cycle of outputting the row command.

Step S532: the row command arbiter prohibiting the non-replicated row command from participating in the final arbitration during the first clock cycle after the current clock cycle.

If the non-replicated row command output by the row command arbiter at T0 occupies the command bus for 0.5 clock cycle, the row command arbiter can select a row command to participate in the final arbitration during 0.5 clock cycle after T0 (i.e., the next 0.5 clock cycle after the current clock cycle, set as T0.5); the row command selected by the row command arbiter to participate in the final arbitration should meet the following conditions: it does not conflict with the non-replicated row command output at T0, and occupies the command bus for 0.5 clock cycle, so that the row command that participates in the final arbitration at T0.5 corresponds to that the non-replicated row command output at T0 occupies the command bus for 0.5 clock cycle.

Furthermore, at T1 after T0, the row command arbiter prohibits the non-replicated row command from participating in the final arbitration, that is, the row command arbiter prohibits the row command not coming from the command replicator from participating in the arbitration at T1.

In a further optional implementation, the selected row command that occupies the command bus for 0.5 clock cycle can be output by the row command arbiter during the first clock cycle, and the output row command can be replicated by the command replicator, and the corresponding replicated row command can be output by the row command arbiter during 0.5 clock cycle after the first clock cycle.

Step S533: during the first clock cycle after the current clock cycle, the row command arbiter outputting the replicated row commands in sequence according to the input time sequence of the replicated row commands during the current clock cycle and indicating that the pseudo channel address belongs to the first pseudo channel.

Because the non-replicated row command output by the row command arbiter at T0 occupies the command bus for 0.5 clock cycle, the row command arbiter can output the replicated row command at T1. The row command arbiter can output the replicated row commands in sequence according to the input time sequence of the replicated row commands sent to the row command arbiter at T0, and indicate that the output replicated row commands to be transmitted through the first pseudo channel.

In a further optional implementation, in order to ensure the timing correctness of memory access, the common control logic circuit can take into account the timing parameter of the command output by the final arbiter when determining the request command sent to the final arbiter, so as to ensure that the timing of the request command sent to the final arbiter matches the timing of the command output by the final arbiter correspondingly. As an optional implementation, the common control logic circuit can be further configured to determine the timing parameter related to memory access (such as various timing parameters used for recording and detecting the memory access request) so as to ensure the correctness of the memory access operation. It should be noted that the timing parameter related to memory access can be all kinds of time-related parameters involved in the memory access operation, and the timing parameter is designed to ensure the correctness of the memory access operation, that is to say, in a computer system, data reading and writing in the memory need to be carried out within a certain time sequence, so as to ensure correct data exchange and storage.

In an optional implementation, the common control logic circuit can determine the timing parameter related to memory access by means of timing parameter counting based on the counting basis of the timing parameter. For example, the common control logic circuit can sample the command output by the final arbiter when the final arbiter outputs a non-replicated command, and start timing parameter counting for the sampled command based on the counting basis of the timing parameter. As an optional implementation, the timing parameter of the command count can be used for the common control logic circuit to determine the request command sent to the final arbiter, so that the timing of the request command sent to the final arbiter matches the timing of the command output by the final arbiter correspondingly, and the timing correctness of memory access is guaranteed.

As an optional implementation, based on that the clock cycle of the command occupying the command bus can include 0.5 clock cycle, 1 clock cycle and 1.5 clock cycles, the embodiment of the present disclosure can take the command that occupies the command bus for 1.5 clock cycles as the starting point of timing parameter counting, that is, as the counting basis of the timing parameter.

In an optional implementation, in order to make the counting basis of the timing parameter more convenient and timely, for the command that occupies the command bus for 1.5 clock cycles, the embodiment of the present disclosure takes the first clock rising edge when the command is output by the final arbiter as a starting position to perform the timing parameter counting, so that the command occupying the command bus for 1.5 clock cycles is one clock cycle ahead of the standard clock cycle.

It should be noted that, under the requirements of memory protocols such as HBM3 or the like, the timing parameter counting is performed on the command with the second clock rising edge as the starting position (that is, the starting point of the standard clock cycle can be regarded as the second clock rising edge when the command is output by the final arbiter); in the embodiment of the present disclosure, for the command that occupies the command bus for 1.5 clock cycles, the timing parameter counting is performed with the first clock rising edge when the command is output by the final arbiter as a starting position, which is equivalent to advancing the starting time of the timing parameter counting of the command by 1 clock cycle.

That is to say, for the command that occupies the command bus for 1.5 clock cycles, the embodiment of the present disclosure takes the first clock rising edge when the command is output by the final arbiter as the starting position (that is, the starting point of timing parameter counting) to perform time sequence timing, instead of waiting for one clock cycle before starting the timing parameter counting, which can make the time sequence timing of the command that occupies the command bus for 1.5 clock cycles more convenient; moreover, time sequence timing is performed on the command that occupies the command bus for 1.5 clock cycles in advance, which can make the timing update time be advanced, thus making the time for subsequent screening of commands that do not meet the timing conditions earlier and improving the timeliness of screening commands that do not meet the timing conditions.

Based on the counting basis of the timing parameter (for the command occupying the command bus for 1.5 clock cycles, the timing parameter counting is performed with a first clock rising edge when the command is output by the final arbiter as a starting position), as an optional implementation, when sampling the non-replicated command output by the final arbiter and starting the timing parameter counting for the sampled command, the embodiment of the present disclosure can perform, based on the counting basis of the timing parameter, the timing parameter counting on the currently sampled command according to the clock cycle variation of the sampled adjacent commands occupying the command bus.

As an optional implementation, based on that the clock cycle of the command occupying the command bus can be divided into 0.5 clock cycle, 1 clock cycle and 1.5 clock cycles, the clock cycle variation of the sampled adjacent commands (e.g., the two non-replicated commands output by the final arbiter) occupying the command bus may be as follows:
1 clock cycle to 1 clock cycle, 0.5 clock cycle to 0.5 clock cycle, 1.5 clock cycle to 1.5 clock cycle, 1 clock cycle to 0.5 clock cycle, 0.5 clock cycle to 1 clock cycle, 1.5 clock cycles to 0.5 clock cycle, 1.5 clock cycles to 1 clock cycle, 0.5 clock cycle to 1.5 clock cycles, 1 clock cycle to 1.5 clock cycles.

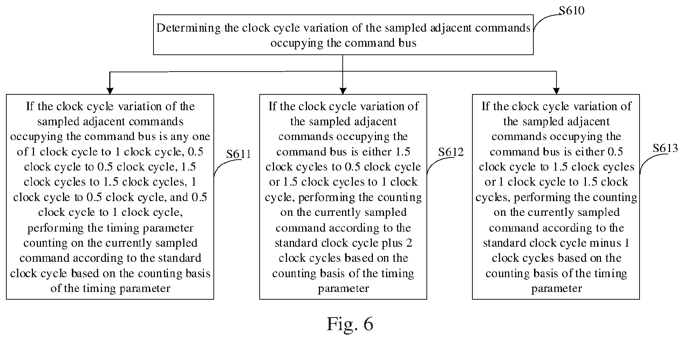

According to the different situations of clock cycle variation, the optional implementations of performing the timing parameter counting on the sampled commands in the embodiment of the present disclosure are described below. As an optional implementation, Fig. 6 illustratively shows an optional flowchart of performing timing parameter counting on commands provided by an embodiment of the present disclosure, and the method flow can be executed by the common control logic circuit. Referring to Fig. 6, the method flow can include the following steps.

Step S610: determining the clock cycle variation of the sampled adjacent commands occupying the command bus.

Step S611: if the clock cycle variation of the sampled adjacent commands occupying the command bus is any one of 1 clock cycle to 1 clock cycle, 0.5 clock cycle to 0.5 clock cycle, 1.5 clock cycles to 1.5 clock cycles, 1 clock cycle to 0.5 clock cycle, and 0.5 clock cycle to 1 clock cycle, performing the timing parameter counting on the currently sampled command according to the standard clock cycle based on the counting basis of the timing parameter.

For ease of explanation, the clock cycle can be defined as T, so that a command occupying the command bus for 0.5T (0.5 clock cycle) can be called a 0.5T command, a command occupying the command bus for 1T (1 clock cycle) can be called a 1T command, and a command occupying the command bus for 1.5T (1.5 clock cycles) can be called a 1.5T command.

If the sampled adjacent commands are 1T command to 1T command (that is, the clock cycle variation of the sampled adjacent commands occupying the command bus is 1 clock cycle to 1 clock cycle), the embodiment of the present disclosure can perform, based on the counting basis of the timing parameter described above, the timing parameter counting on the currently sampled command according to the standard clock cycle; for example, the counting is performed according to the standard timing parameter required by memory technologies such as HBM3 or the like, and for example, the timing parameter counting is performed with the second clock rising edge when the command is output as the starting position.

Similarly, in the case where the sampled adjacent commands are 0.5T command to 0.5T command, 1.5T command to 1.5T command (because the timing parameter counting on the 1.5T command is advanced by 1T, the timing of 1.5T command to 1.5T command can cancel out each other, and the timing requirements can be met by keeping the calculation according to the standard timing parameters), 1T command to 0.5T command, and 0.5T command to 1T command, the embodiment of the present disclosure can perform, based on the counting basis of the timing parameter described above, the timing parameter counting on the currently sampled command according to the standard clock cycle.

Step S612: if the clock cycle variation of the sampled adjacent commands occupying the command bus is either 1.5 clock cycles to 0.5 clock cycle or 1.5 clock cycles to 1 clock cycle, performing the counting on the currently sampled command according to the standard clock cycle plus 2 clock cycles based on the counting basis of the timing parameter.

If the sampled adjacent commands are 1.5T command to 0.5T command (that is, the clock cycle variation of the sampled adjacent commands occupying the command bus is 1.5 clock cycle to 0.5 clock cycle), the embodiment of the present disclosure can perform, based on the counting basis of the timing parameter described above, the timing parameter counting on the currently sampled command according to the standard clock cycle plus 2 clock cycles; for example, the counting is performed according to the standard timing parameter required by memory technologies such as HBM3 or the like, plus 2 clock cycles.

It should be noted that in the embodiment of the present disclosure, the 1.5T command takes the first clock rising edge when the command is output by the final arbiter as the starting point for the timing parameter counting, which is one clock cycle earlier than the standard timing parameter. Therefore, in the case of 1.5T command to 0.5T command, because the time interval is 1T, 1 clock cycle should be firstly added to the standard timing parameter for performing the timing parameter counting; at the same time, based on the arbitration scheduling method in the case of 1.5T command described above (see the above description of Fig. 5A), if only 1 clock cycle is added to the standard timing parameter for performing the timing parameter counting in the case of 1.5T command to 0.5T command, the timing parameter counting of 1.5T command to 1T command transmitted through the first pseudo channel will be less than the standard timing parameter by 1 clock cycle. Therefore, in order for compensation, the embodiment of the present disclosure performs the timing parameter counting in the case of 1.5T command to 1T command based on the standard timing parameter plus 2 clock cycles.

That is to say, for the 1.5T command, the timing parameter counting is started according to the first rising edge when it is output by the final arbiter, which is 1T earlier than the second rising edge required by memory protocols such as HBM3 or the like to start counting. For example, if the time when the 1.5T command is output by the final arbiter is time T0, the timing parameter counting is started for the 1.5T command at time T1. At the same time, according to the solution provided by the embodiment of the present disclosure, if the final arbiter outputs a non-replicated 1.5T command (with a pseudo channel address belonging to the zeroth pseudo channel) at time T0, then the final arbiter starts to output a replicated 1.5T command (with a pseudo channel address belonging to the first pseudo channel) at time T2, and the optional implementation can specifically refer to that shown in Fig. 5A. Based on the above situation, assuming that the output interval from the 1.5T command to the 0.5T command is N clock cycles, at the moment T(N+1), the final arbiter can start to output a non-replicated 0.5T command indicating the zeroth pseudo channel; it can be seen that the 0.5T command is separated by N clock cycles from time T1 when the timing parameter counting is performed for the 1.5T command, and is separated by N+1 clock from time T0 when the 1.5T command is output.

At the same time, based on the command replication rule of the embodiment of the present disclosure, the final arbiter needs to output a corresponding replicated 0.5T command indicating the first pseudo channel at time T(N+2), and the corresponding replicated 1.5T command transmitted through the first pseudo channel is output at time T2 (memory protocols such as HBM3 or the like require that the 1.5T command should take the rising edge of the clock as the output starting point), and the timing parameter counting for the corresponding replicated 1.5T command starts at time T3. That is to say, for the non-replicated 1.5T command and the non-replicated 0.5T command, there are corresponding replicated commands (i.e. the replicated 1.5T command and the replicated 0.5T command); the timing parameter counting for the replicated 1.5T command starts at T3, and the replicated 0.5T command is output by the final arbiter at T(N+2), and the interval between time T3 and time T(N+2) is N-1 clock cycles, which is less than the timing requirement of an interval of N clock cycles, so the embodiment of the present perform the timing parameter counting for the case of 1.5T command to 0.5T command by using the standard timing parameter plus 2 clock cycles, so as to meet the timing requirement of the corresponding replicated command in the first pseudo channel.

Similarly, in the case where the sampled adjacent commands are 1.5T command to 1T command, the embodiment of the present disclosure can perform, based on the counting basis of the timing parameter described above, the timing parameter counting on the currently sampled command according to the standard clock cycle plus 2 clock cycles.

Step S613: if the clock cycle variation of the sampled adjacent commands occupying the command bus is either 0.5 clock cycle to 1.5 clock cycles or 1 clock cycle to 1.5 clock cycles, performing the counting on the currently sampled command according to the standard clock cycle minus 1 clock cycles based on the counting basis of the timing parameter.

If the sampled adjacent commands are 0.5T command to 1.5T command (that is, the clock cycle variation of the sampled adjacent commands occupying the command bus is 0.5 clock cycle to 1.5 clock cycles), the embodiment of the present disclosure can perform, based on the counting basis of the timing parameter described above, the timing parameter counting on the currently sampled command according to the standard clock cycle minus 1 clock cycle; for example, the counting is performed according to the standard timing parameter required by memory technologies such as HBM3 or the like, minus 1 clock cycle.

It should be noted that the 1.5T command takes the first clock rising edge when the command is output by the final arbiter as the starting point for the timing parameter counting, which is one clock cycle earlier than the standard timing parameter. Therefore, when considering the timing interval from 0.5T command to 1.5T command, the starting point of the timing parameter counting corresponding to 0.5T command to 1.5T command needs to be minus 1 clock cycle on the basis of the standard timing parameter.

Similarly, in the case where the sampled adjacent commands are 1T command to 1.5T command, the embodiment of the present disclosure can perform, based on the counting basis of the timing parameter described above, the counting on the currently sampled command according to the standard clock cycle minus 1 clock cycle.

As an optional implementation, a common timing check module shared by the zeroth pseudo channel and the first pseudo channel can be set in the common control logic circuit to execute the above process of determining the timing parameter related to memory access. For example, the process that the common control logic circuit samples the non-replicated command output by the final arbiter and starts timing parameter counting for the sampled command can be executed by the common timing check module in the common control logic circuit. By adjusting the timing parameter counting in the above manner, the timing counting of the zeroth pseudo channel can be achieved, and the timing requirements of the zeroth pseudo channel and the first pseudo channel can be met, thus simplifying the logical quantity of timing.

The timing parameter counting method provided by the embodiment of the present disclosure can assist the memory controller in cooperative control of the zeroth pseudo channel and the first pseudo channel, so that the zeroth pseudo channel and the first pseudo channel can calibrate the timing and ensure the correctness of the timing, and the timing parameter counting method provided by the embodiment of the present disclosure can simplify the logic of timing check by the memory controller. That is to say, the timing parameter counting method of the embodiment of the present disclosure can be combined with the command replication method and the command arbitration scheduling method described above to further realize the cooperative control of the zeroth pseudo channel and the first pseudo channel, so that the memory controller can manage and control the zeroth pseudo channel and the first pseudo channel as a whole channel, and ensure that the commands transmitted through the zeroth pseudo channel and the first pseudo channel can comply with the timing and page status requirements of the respective pseudo channels, thus ensuring the correctness of memory access.

Specifically, in the embodiment of the present disclosure, the non-replicated command output by the final arbiter is sampled, and based on the counting basis of the timing parameter, the timing parameter counting is started for the sampled command; and at the same time, when performing the timing parameter counting, the timing parameter counting is performed on the sampled command according to the clock cycle variation of the sampled adjacent commands occupying the command bus, thus ensuring the timing correctness of the non-replicated commands transmitted through the zeroth pseudo channel and maintaining the timing correctness of the replicated commands transmitted through the first pseudo channel.

Moreover, the embodiment of the present disclosure ensures the consistency of the page status of the zeroth pseudo channel and the first pseudo channel by means of command replication. For example, for the row command (a command other than the column command such as the read command, the write command. etc.), the embodiment of the present disclosure ensures that the row command transmitted through the zeroth pseudo channel is consistent with the row command transmitted through the zeroth pseudo channel by means of replicating the row command transmitted through the zeroth pseudo channel, so that the embodiment of the present disclosure can ensure, in the case where the row command has an influence on the page status, that the influence of the row command on the page status of the zeroth pseudo channel and the first pseudo channel is consistent.

Moreover, in terms of the column command such as the read command and the write command, etc., for the column command triggered by a memory access request with the second data length (e.g., 64 bytes), the embodiment of the present disclosure can transmit the column commands marked as true through both the zeroth pseudo channel and the first pseudo channel (the column command marked as true transmitted through the first pseudo channel can be obtained by replication), and the column commands transmitted through the zeroth pseudo channel and the first pseudo channel can carry consistent automatic pre-charge instructions (automatic pre-charge will affect the page status), and therefore it can be ensured that the column commands (carrying automatic pre-charge instructions) triggered by the memory access request with the second data length (e.g., 64 bytes) have consistent influence on the page status of the zeroth pseudo channel and the first pseudo channel. For the column command triggered by a memory access request with the first data length (e.g., 32 bytes), the embodiment of the present disclosure can transmit the column command marked as true through a corresponding pseudo channel according to the pseudo channel address indicated by the memory access request, and the column command does not carry an automatic pre-charge instruction, so that the column command marked as true will not affect the page status, and the memory access requirement of the first data length (e.g., 32 bytes) is guaranteed.

It can be seen that the solution provided by the embodiment of the present disclosure can realize the cooperative control of the zero pseudo channel and the first pseudo channel through a set of control logic in the memory controller, reduce the number of control logic circuits used by the memory controller, and reduce the overhead of the memory controller; moreover, the correctness of memory access can be ensured (for example, the consistency of the timing and page status of the zeroth pseudo channel and the first pseudo channel is ensured) under the condition of ensuring the memory access requirement of the memory access request.

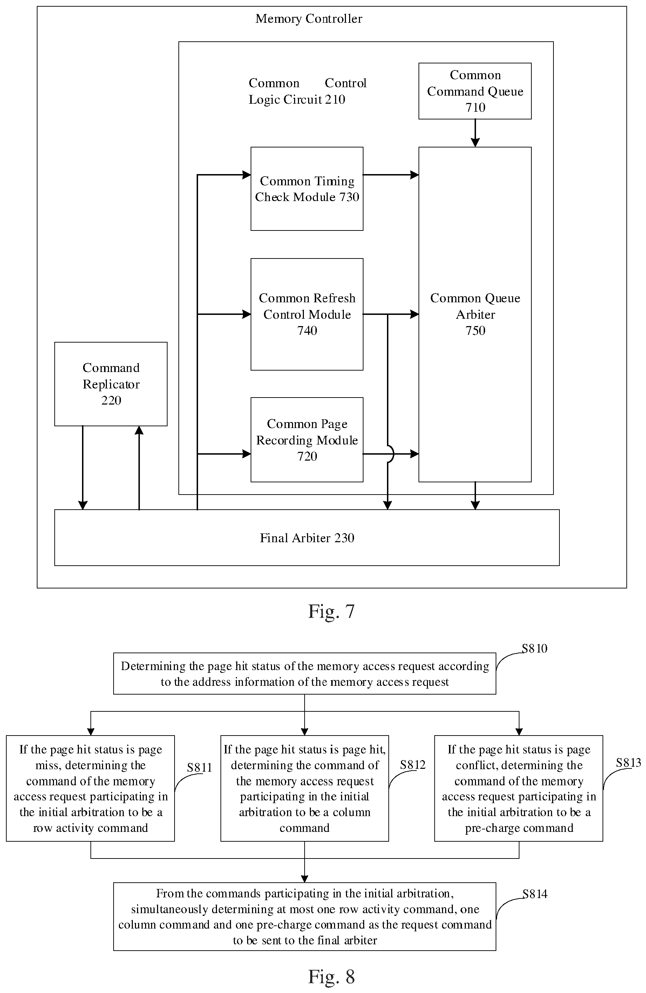

In a further optional implementation, the common control logic circuit can also implement at least one of the following functions: storing request information of the memory access request, recording the block information of blocks in the memory, managing the refresh operation of the memory, etc. In an implementation, Fig. 7 illustratively shows further another diagram of a memory controller provided by an embodiment of the present disclosure. Referring to Figs. 2, 4A and 7, the common control logic circuit 210 in the memory controller can include a common command queue 710, a common page recording module 720, a common timing check module 730, a common refresh control module 740 and a common queue arbiter 750.

The common command queue 710 is a command queue shared by the zeroth pseudo channel and the first pseudo channel set in the memory controller, and is at least used to store request information of the memory access request. In an optional implementation, the memory controller can perform an address decoding process on the memory access request issued by the processor core to obtain the request information of the memory access request after the address decoding process, so that the request information of the memory access request after the address decoding process can be stored by the common command queue 710. For example, an address decoding module can be set in the memory controller, and the address decoding module can perform an address decoding process on the memory access request issued by the processor core, and the address decoding module can send the request information of the memory access request after the address decoding process to the common command queue 710 for storage. As an optional implementation, the setting bit of the physical address of the memory access request can carry the pseudo channel address; for example, the fifth bit (bit5) of the physical address of the memory access request can carry the pseudo channel address; and therefore, when the address decoding process is performed on the memory access request, the pseudo channel address can be determined from the setting bit (e.g., bit5) of the physical address of the memory access request, and the pseudo channel to which the pseudo channel address belongs can be taken as the pseudo channel corresponding to the memory access request.

The request information of the memory access request stored in the common command queue can include the pseudo channel address of the memory access request; the pseudo channel address of the memory access request is used to indicate whether the column command is marked true or false when the final arbiter outputs the column command. It should be noted that except for indicating whether the column command is marked true or false, the pseudo channel address of the memory access request may not be used for other purposes in the embodiment of the present disclosure; that is, the pseudo channel address of the memory access request is not used in other functional modules of the memory controller except for indicating whether the column command is marked true or false.

It can be seen that, different from the way of setting independent control logic circuits for each pseudo channel, the embodiment of the present disclosure does not need to set command queues for each pseudo channel independently (for example, it is not necessary to set a command queue for the zeroth pseudo channel independently, and it is not necessary to set a command queue for the first pseudo channel independently), but the request information of memory access requests is uniformly stored in the common command queue 710 without distinguishing the pseudo channel addresses of the memory access request. Therefore, the embodiment of the present disclosure can reduce the number of command queues. For example, compared with setting command queues independently for the zeroth pseudo channel and the first pseudo channel, the embodiment of the present disclosure can save one command queue, thereby reducing the amount and overhead of control logic at the level of command queues.

The common page recording module 720 is a page recording module shared by the zeroth pseudo channel and the first pseudo channel set in the memory controller, and is configured to record block information of the block in the memory. The common page recording module 720 can record the block information of the block in the memory without paying attention to or using the pseudo channel address. As an optional implementation, the block information of the block can include, but is not limited to: address information and page status information of the block. The page status information of the block can at least include: the buffer status of the block; The buffer status of the block records whether the buffer of the block is currently loaded with a row, and records the loaded row when the buffer of the block is loaded with a row. Optionally, the address information of the block can include a block address, a stack ID, and a row address. For example, the block information of the block can include a block address, a stack ID, a row address, and information on whether a row is loaded in the block. In the embodiment of the present disclosure, the common page recording module does not record the pseudo channel address of the memory access request, so that the recording unit of the common page recording module can be halved; and the block address, the stack ID and the row address are used as the address information in the block information recorded by the common page recording module, so that the information amount of the address information recorded by the common page recording module can be reduced, thereby saving the area occupied by the common page recording module in the memory controller.

As an optional implementation, after the memory access request enters the memory controller, the memory controller can perform address decoding, so as to query the block information of the block in the common page recording module, and compare whether the row accessed by the memory access request is consistent with the target block, and whether the target block is loaded with a row; and therefore, the page hit status such as page hit, page miss or page conflict, etc., can be determined for the memory access request.

As an optional implementation, when the final arbiter outputs a row command not coming from the command replicator, the common page recording module 720 can sample the row command output by the final arbiter and update the block information of the block corresponding to the row pointed by the row command.

It can be seen that, different from the way of setting independent control logic circuits for each pseudo channel, the embodiment of the present disclosure does not need to set page recording modules for each pseudo channel independently; for example, it does not need to set an independent page recording module for the zeroth pseudo channel, and it does not need to set an independent page recording module for the first pseudo channel; but the block information of the block in the memory is recorded by using the common page recording module shared by the zeroth pseudo channel and the first pseudo channel, without distinguishing the pseudo channel addresses of the memory access request. Furthermore, the embodiment of the present disclosure can reduce the number of page recording modules. For example, compared with setting page recording modules independently for the zeroth pseudo channel and the first pseudo channel, the embodiment of the present disclosure can save one page recording module, thereby reducing the amount and overhead of control logic at the level of page recording modules.

The common timing check module 730 is a timing check module shared by the zeroth pseudo channel and the first pseudo channel set in the memory controller, and is configured to determine the timing parameter related to memory access (such as various timing parameters used for recording and detecting the memory access request) to ensure the correctness of the memory access operation. The common timing check module can determine the timing parameter related to memory access without paying attention to or using the pseudo channel address. For example, when the final arbiter outputs a non-replicated command, the command output by the final arbiter is sampled and the timing parameter counting is started for the command. The related contents of timing parameter counting can refer to the description in the corresponding part above, and details will not be expanded here.

It can be seen that, different from the way of setting independent control logic circuits for each pseudo channel, the embodiment of the present disclosure does not need to set timing check modules for each pseudo channel independently; for example, it does not need to set an independent timing check module for the zeroth pseudo channel, and it does not need to set an independent timing check module for the first pseudo channel; but the timing parameter related to memory access is determined by using the common timing check module shared by the zeroth pseudo channel and the first pseudo channel, without distinguishing the pseudo channel addresses of the memory access request. Furthermore, the embodiment of the present disclosure can reduce the number of timing check modules. For example, compared with setting timing check modules independently for the zeroth pseudo channel and the first pseudo channel, the embodiment of the present disclosure can save one timing check module, thereby reducing the amount and overhead of control logic at the level of timing check modules.

The common refresh control module 740 is a refresh control module shared by the zeroth pseudo channel and the first pseudo channel set in the memory controller, and is configured to manage the refresh operation of the memory, for example, control the refresh operation of the memory and generate a corresponding refresh command. The common refresh control module can manage the refresh operation of the memory without paying attention to and using the pseudo channel address. It should be noted that the refresh command is used to refresh the memory to prevent data loss of the memory; for example, for DRAM and other types of memory, due to the existence of charge leakage, periodic refresh is required to prevent data loss of the memory. As an optional implementation, the refresh command can be divided into an all banks refresh command and a per bank refresh command.

In a further optional implementation, the common refresh control module 740 can generate any one command of a per bank pre-charge (PCHGpb) command, an all banks pre-charge (PCHGab) command, a per bank refresh (REFpb) command, an all banks refresh (REFab) command, an RFMab command and an RFMpb command as needed.

In a further optional implementation, the common refresh control module 740 can be further configured to monitor the cumulative number of times the block in the memory is activated.

In an optional implementation, when the final arbiter outputs a non-replicated row command, if the row command belongs to any one of a per bank refresh (REFpb) command, an all banks refresh (REFab) command , an RFMab command and an RFMpb command, the common refresh control module can sample the row command sent by the final arbiter and update the status of the row command; as an optional implementation, in the case where the row command is sent to the memory, the status of the row command can represent the information, such as the address or the like, of the block corresponding to the row indicated by the row command.

It should be noted that the refresh command needs to follow the refresh interval of the command, so the common refresh control module needs to confirm whether the final arbiter arbitrates to send the refresh command to the memory by sampling the non-replicated row command output by the final arbiter, so as to maintain the generation of the refresh command according to the refresh interval. For example, for the per bank refresh (REFpb) command, if the per bank refresh (REFpb) command refreshes a certain block of the memory, after outputting the per bank refresh (REFpb) command for this block, it is necessary to follow a certain refresh interval before outputting the per bank refresh (REFpb) command of this block again. Therefore, the common refresh control module needs to confirm whether the final arbiter sends a per bank refresh (REFpb) command to the memory by sampling the non-replicated row command output by the final arbiter, so as to ensure that the refreshed block is refreshed again after a certain refresh interval; at this time, the common refresh control module can update the status of the per bank refresh (REFpb) command, so as to maintain that the per bank refresh (REFpb) command sent to the memory can refresh a certain block according to a certain refresh interval.

It can be seen that, different from the way of setting independent control logic circuits for each pseudo channel, the embodiment of the present disclosure does not need to set refresh control modules for each pseudo channel independently; for example, it does not need to set an independent refresh control module for the zeroth pseudo channel, and it does not need to set an independent refresh control module for the first pseudo channel; but the refresh operation of the memory is handled by the common refresh control module shared by the zeroth pseudo channel and the first pseudo channel, without distinguishing the pseudo channel addresses of memory access requests. Furthermore, the embodiment of the present disclosure can reduce the number of refresh control modules. For example, compared with setting refresh control modules independently for the zeroth pseudo channel and the first pseudo channel, the embodiment of the present disclosure can save one refresh control module, thereby reducing the amount and overhead of control logic at the level of refresh control modules.

The common queue arbiter 750 is a queue arbiter shared by the zeroth pseudo channel and the first pseudo channel set in the memory controller, and can determine the request command sent to the final arbiter to participate in the final arbitration. As an optional implementation, based on the settings of the common page recording module 720, the common timing check module 730 and the common refresh control module 740, the common queue arbiter can determine the request command corresponding to the memory access request and sent to the final arbiter according to the information provided by at least one of the common page recording module 720, the common timing check module 730 and the common refresh control module 740, and the request information of the memory access request stored in the common command queue 710. The common page recording module 720 provides at least the block information of the block in the memory, the common timing check module 730 provides at least the timing parameter of the non-replicated command output by the final arbiter, and the common refresh control module 740 can provide at least the refresh command (further, the common refresh control module 740 can also provide the pre-charge command, the RFMab command, the RFMpb command, etc.).

As an optional implementation, according to the information provided by at least one of the common page recording module 720, the common timing check module 730 and the common refresh control module 740, the common queue arbiter can determine the command of the memory access request to participate in the initial arbitration of the common queue arbiter; and then, the common queue arbiter can determine the request command corresponding to the memory access request and sent to the final arbiter from the commands participating in the initial arbitration. That is to say, the common queue arbiter can determine the request command corresponding to the memory access request and sent to the final arbiter through initial arbitration; moreover, when selecting the command to participate in the initial arbitration, the information provided by at least one of the common page recording module 720, the common timing checking module 730 and the common refresh control module 740 can be combined.

It should be noted that the strategy and mode for the common queue arbiter to determine the command to participate in the initial arbitration based on at least one of the block information of the block provided by the common page recording module, the timing parameter provided by the common timing check module and the command provided by the common refresh control module, can be defined and set according to the actual situations, without being limited in the embodiment of the present disclosure. For example, based on the buffer status of the block provided by the common page recording module, the page hit status of the memory access request is determined; different commands to participate in the initial arbitration are generated based on different page hit status of the memory access request while meeting the requirement of matching in timing with the timing parameter provided by the common timing check module.

In an optional implementation, the common queue arbiter can determine the page hit status of the memory access request at least according to the block information of the block recorded by the common page recording module and the address information in the request information of the memory access request stored in the common command queue; according to the page hit status of the memory access request, the command of the memory access request to participate in the initial arbitration of the common queue arbiter is determined (further, the command of the memory access request to participate in the initial arbitration of the common queue arbiter can be determined according to the page hit status of the memory access request while meeting the requirement of matching in timing with the timing parameter provided by the common timing check module); furthermore, from the commands participating in the initial arbitration, the request command corresponding to the memory access request and sent to the final arbiter is determined.

As an optional implementation, Fig. 8 illustratively shows an optional flowchart of determining a request command of a memory access request provided by an embodiment of the present disclosure, and the flow can be executed by the common queue arbiter. Referring to Fig. 8, the flow can include the following steps.

Step S810: determining the page hit status of the memory access request according to the address information of the memory access request.

In an optional implementation, based on that the page status information of the block includes the buffer status, as an optional implementation for the common queue arbiter to determine the page hit status of the memory access request, the common queue arbiter can query the buffer status of the corresponding block recorded by the common page recording module according to the address information of the memory access request (for example, based on the address information of the memory access request, the block corresponding to the address information is determined, so that the buffer status of the corresponding block recorded by the common page recording module can be queried), and then, the page hit status of the memory access request is determined according to the buffer status of the queried block.

For example, if the buffer status of the queried block indicates that the buffer is not loaded with any row, the page hit status of the memory access request is confirmed to be page miss; if the buffer status of the queried block indicates that the buffer is loaded with a row, and the row loaded in the buffer is determined to be consistent with the row pointed by the memory access request, the page hit status of the memory access request is confirmed to be page hit; if the buffer status of the queried block indicates that the buffer is loaded with a row, and the row loaded in the buffer is determined to be inconsistent with the row pointed by the memory access request, the page hit status of the memory access request is confirmed to be page conflict.

Step S811: if the page hit status is page miss, determining the command of the memory access request participating in the initial arbitration to be a row activity command.

As an optional implementation, if the page hit status of the memory access request is page miss, because no row is loaded in the buffer of the block at this time, the row pointed by the memory access request needs to be loaded into the buffer of the block through the row activity command, and then data can be read from or written into the row pointed by the memory access request through a column address strobe command; therefore, when the page hit status of the memory access request is determined to be page miss, a row activity command can be generated to participate in the initial arbitration.

Step S812: if the page hit status is page hit, determining the command of the memory access request participating in the initial arbitration to be a column command.

If the page hit status of the memory access request is page hit, because the row pointed by the memory access request has been loaded into the buffer of the block at this time, data can be directly read from or written into the row pointed by the memory access request; therefore, the embodiment of the present disclosure can generate a read command or a write command according to the command flag (e.g., read/write flag) of the memory access request, to participate in the initial arbitration. For example, when the memory access request is a read request, based on that the command flag of the read request is "read", a read command can be generated and participates in the initial arbitration; when the memory access request is a write request, based on that the command flag of the write request is "write", a write command can be generated and participates in the initial arbitration.

In one implementation example, based on that the column of a certain row of the block corresponds to storage units storing data, when the row pointed by the memory access request has been loaded into the buffer of the block, the column in the row can be selected by a column address strobe command, so as to read data from or write data into the selected row; for example, the column address strobe command can select the column in the row of the block, so as to read data from or write data into a specified starting column and subsequent columns in a concurrent manner; therefore, when the page hit status of the memory access request is page hit, a column address strobe command can be generated and participates in the initial arbitration. For example, when the page hit status of the memory access request is page hit, if the memory access request is a read request, a column address strobe command (i.e., a read command) of the read operation can be generated to participate in the initial arbitration; if the memory access request is a write request, a column address strobe command (i.e., a write command) of the write operation can be generated to participate in transmission arbitration.

Step S813, if the page hit status is page conflict, determining the command of the memory access request participating in the initial arbitration to be a pre-charge command.

As an optional implementation, if the page hit status of the memory access request is a page conflict, because the row pointed by the memory access request is inconsistent with the row loaded in the buffer of the block at this time, the block needs to be pre-charged first, then the row pointed by the memory access request can be loaded into the buffer of the block through a row activity command, and then data can be read from or written into the row pointed by the memory access request through a column address strobe command; therefore, when the page hit status of the memory access request is determined to be page conflict, a pre-charge command can be generated (the pre-charge command is used to pre-charge the block corresponding to the row pointed by the memory access request) and participates in the initial arbitration. The generated precharge command can be a per bank pre-charge command, and indicates that the block to be pre-charged is the block where the row pointed by the access request is located.

It should be noted that for the memory access request sent by the processor core, the same memory access request may successively generate a pre-charge command, a row activity command and a column address strobe command to participate in the initial arbitration. For example, when the page hit status of a certain memory access request is page conflict, a pre-charge command can be generated to participate in the initial arbitration, so that the block where the row pointed by the memory access request is located can be pre-charged through the pre-charge command; but then, the page hit status of the memory access request may become page miss, and a row activity command can be generated subsequently to participate in the initial arbitration, so that the row pointed by the memory access request can be loaded into the buffer of the block; furthermore, when the page hit status of the memory access request becomes page hit, a column address strobe command can be generated to participate in the initial arbitration, so as to read data from or write data into the selected column. Of course, the embodiment of the present disclosure may also generate a row activity command and a column address strobe command successively for the same memory access request, and the corresponding case can refer to the above description and details will not be expanded here.

Step S814: from the commands participating in the initial arbitration, simultaneously determining at most one row activity command, one column command and one pre-charge command as the request command to be sent to the final arbiter.

When performing initial arbitration on the commands participating in the initial arbitration, the common queue arbiter can select at most one row activity command, one column command and one pre-charge command from the commands participating in the initial arbitration as the request command sent to the final arbiter, and the common queue arbiter does not take into account the pseudo channel address of the memory access request corresponding to the command when performing the initial arbitration on the command. The strategy of the common queue arbiter performing the initial arbitration can be set according to the actual situations, without being limited in the embodiment of this disclosure.

It can be seen that, different from the way of setting independent control logic circuits for each pseudo channel, the embodiment of the present disclosure does not need to set queue arbiters for each pseudo channel independently; for example, it does not need to set a queue arbiter for the zeroth pseudo channel, and it does not need to set a queue arbiter for the first pseudo channel; but the request command of the memory access request sent to the final arbiter is determined by using the common queue arbiter shared by the zeroth pseudo channel and the first pseudo channel, without distinguishing the pseudo channel addresses of the memory access request. Furthermore, the embodiment of the present disclosure can reduce the number of queue arbiters. For example, compared with setting queue arbiters independently for the zeroth pseudo channel and the first pseudo channel, the embodiment of the present disclosure can save one queue arbiter, thereby reducing the amount and overhead of control logic at the level of queue arbiters.

In a further optional implementation, the command generated by the common refresh control module can also be sent to the final arbiter to participate in the final arbitration. For example, the command generated by the common refresh control module can include a refresh command (a per bank refresh command, an all banks refresh command, etc.), and the refresh command generated by the common refresh control module can be sent to the final arbiter to participate in the final arbitration; for another example, the command generated by the common refresh control module can further include a pre-charge command (a per bank pre-charge commands, an all banks pre-charge command, etc.), a RFMab command, a RFMpb command, etc., and any of these commands can be sent to the final arbiter to participate in the final arbitration.

Thus, in an optional implementation, in the final arbiter, the command coming from the common control logic circuit may be a command coming from the common queue arbiter or a command coming from the common refresh control module. Furthermore, the final arbiter can perform final arbitration on the commands sent from the common queue arbiter, the common refresh control module and the command replicator, and determine and output the commands passed by the final arbitration. The content of the final arbiter arbitrating and scheduling the commands can refer to the description in the corresponding part above, and details will not be expanded here.

It can be seen that the logical components in the common control logic circuit include but are not limited to the common command queue, the common queue arbiter, the common page recording module, the common refresh control module, the common timing check module, etc.; and the pseudo channel address of the memory access request stored in the common command queue is used to indicate whether the column command is marked as true or false, but not for other purposes. Therefore, these logic components can be shared by the zeroth pseudo channel and the first pseudo channel without considering the pseudo channel address of the memory access request (that is, without paying attention to and using the pseudo channel address of the memory access request), so the amount of control logic of the memory controller can be further reduced, thereby further reducing the overhead of the memory controller. It should be further noted that the functional modules (such as logic components) responsible for other functions in the memory controller can also realize the functions of the functional modules without paying attention to and using the pseudo channel address; for example, low power consumption modules can also achieve low power consumption control without paying attention to and using the pseudo channel address.

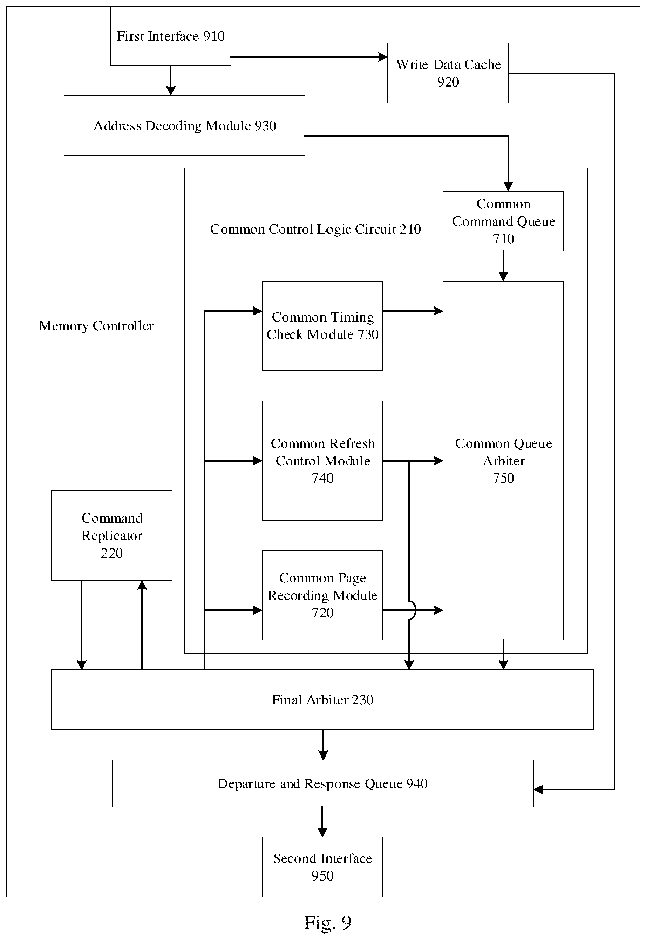

In a further optional implementation, Fig. 9 illustratively shows still another diagram of a memory controller provided by an embodiment of the present disclosure. Referring to Figs. 2, 4A, 7 and 9, the memory controller can further include a first interface 910, a write data cache 920, an address decoding module 930, a departure and response queue 940, and a second interface 950.

The first interface 910 can be an interface of the memory controller for connection with the processor core. For example, the first interface 910 is connected to a system bus, thereby being connected with the processor core through the system bus. The first interface 910 can receive a memory access request issued by an upstream module (such as a processor core) of the memory controller.

As an optional implementation, the type of the memory access request issued by the processor core can be determined according to the processor architecture, memory type and chip design, without being limited in the embodiment of the present disclosure . In one example, the memory access request can include any one of the following: a read request and a write request.

The write data cache 920 is configured to store the write data that needs to be written into the memory when the memory access request is a write request.

The address decoding module 930 can perform an address decoding process on the memory access request received by the first interface 910, and send the request information of the memory access request after the address decoding process to the common control logic circuit, for example, to the common command queue. In an optional implementation, the address decoding module can map the physical address of the memory access request into a memory standard address according to the address mapping rule provided by the configuration register, so as to realize the address decoding process on the memory access request; the address mapping rule can record the mapping rule between the physical address of the memory access request and the memory standard address, and the mapping rule can be in the form of a mapping relationship or a mapping function.

It should be noted that the memory standard address can be regarded as the standard address format adopted by the memory, such as the standard address format of the HBM3 memory, which corresponds to the actual storage location of data stored in the memory. The physical address of the memory access request sent by the processor core is the upstream address, and the format of the physical address of the memory access request is defined by the processor core. For example, the physical address of the memory access request is an address in the physical address space of the processor core, which is determined by the architecture and design of the processor core. By mapping the address in the physical address space of the processor core (the physical address of the memory access request) to the actual storage location of the data stored in the memory (the memory standard address), it can ensure that the memory access data of the memory access request can be correctly operated (for example, the memory access data can be correctly read from or written into the memory). In addition, the memory controller can set a configuration register to record the above address mapping rule; for example, the configuration register can be controlled by the memory controller and record a series of configuration information, and the configuration information includes the above address mapping rule.

In an optional implementation, the request information obtained by the address decoding module 930 after performing the address decoding process on the memory access request can include, but is not limited to: the address information of the memory access request, the command flag of the memory access request, the data length (also called data size) of the memory access data, and the priority of the memory access request. The request information of the memory access request described above can be sent to the common control logic circuit (e.g., to the common command queue in the common control logic circuit).

In an optional implementation, the address information of the memory access request can include the memory standard address obtained after performing the address decoding process on the memory access request.

The command flag of the memory access request is used to indicate the memory access operation type of the memory access request, for example, to indicate whether the memory access operation type of the memory access request is a read operation or a write operation; accordingly, the command flag can also be called a read/write flag.

The memory access data is data corresponding to the memory access operation of the memory access request, such as the write data corresponding to the write request or the read data corresponding to the read request, etc. Accordingly, the data length of the memory access data is, for example, the data length of the write data or the data length of the read data, etc. The data length corresponding to the memory access data of the memory access request can correspond to the second data length supported by a memory channel (for example, 64byte), or can correspond to the first data length supported by a pseudo channel (for example, 32byte).

The priority of the memory access request can be the priority of the memory controller's response to the memory access request, and the processor core can define, when issuing a memory access request, the priority of the memory access request according to factors such as urgency and importance of the memory access request, etc.

In a further optional implementation, when the address decoding module 930 performs the address decoding process on the memory access request, the pseudo channel corresponding to the memory access request can be determined, for example, the pseudo channel address carried by the physical address of the memory access request (the pseudo channel address carried by the physical address of the memory access request can be referred to as the pseudo channel address of the memory access request for short) is determined, so that the pseudo channel to which the pseudo channel address of the memory access request belongs can be regarded as the pseudo channel corresponding to the memory access request. As an optional implementation example, the setting bit of the physical address of the memory access request can carry the pseudo channel address, for example, the fifth bit (bit5) of the physical address of the memory access request can carry the pseudo channel address, so that when the address decoding process is performed on the memory access request, the pseudo channel address can be determined from the setting bit (e.g., bit5) of the physical address of the memory access request, and the pseudo channel to which the pseudo channel address belongs can be taken as the pseudo channel corresponding to the memory access request. For example, if the pseudo channel address of the memory access request belongs to the zeroth pseudo channel, the pseudo channel corresponding to the memory access request is the zeroth pseudo channel; if the pseudo channel address of the memory access request belongs to the first pseudo channel, the pseudo channel corresponding to the memory access request is the first pseudo channel.

It should be noted that the data granularity controlled by the setting bit (e.g., bit5) of the physical address of the memory access request can correspond to the data amount of a pseudo channel for one data transmission. In an example, taking that the data length corresponding to one read or write of HBM3 technology is 32 bytes as an example, the data granularity controlled by the setting bit (e.g., bit5) of the physical address of the access request can be 32 bytes, which corresponds to the data amount transmitted through one pseudo channel by one read or write of HBM3 technology.

It should be noted that although the common control logic circuit does not distinguish the pseudo channel addresses of the memory access request, when the memory access data of the memory access requests has the first data length (e.g., 32 bytes), the embodiment of the present disclosure needs to use the pseudo channel addresses of the memory access request to determine the pseudo channel that actually transmits the column command when the final arbiter schedules the output column commands; and therefore, the pseudo channel address of the memory access request can also be used as part of the request information of the memory access request (e.g., part of the address information of the memory access request). That is to say, the request information of the memory access request can include the pseudo channel address of the memory access request, and the pseudo channel address of the memory access request is used to indicate whether the column command is marked as true or false when the final arbiter outputs the column command.

The departure and response queue 940 can be configured to obtain the command output by the final arbiter, that is, the command output by the final arbiter can be sent into the departure and response queue 940; therefore, the departure and response queue 940 can send the command output by the final arbiter to the memory according to the pseudo channel indicated by the command output by the final arbiter (for example, the pseudo channel address of the command output by the final arbiter). In an optional implementation, the departure and response queue 940 can send the command to the memory through the second interface 950 and the memory physical layer, wherein the second interface 950 is connected to the memory physical layer.

In a further optional implementation, if the command output by the final arbiter is a column command of a write operation, the departure and response queue 940 can send the column command of the write operation output by the final arbiter and the corresponding write data stored in the write data cache 920 to the memory according to the pseudo channel indicated by the column command of the write operation output by the final arbiter.

In a further optional implementation, if the command output by the final arbiter is a column command of a read operation, the departure and response queue 940 can send the column command of the read operation output by the final arbiter to the memory according to the pseudo channel indicated by the column command of the read operation output by the final arbiter.

It should be noted that for the column command output by the final arbiter, the departure and response queue 940 sends the column command to the memory according to the pseudo channel indicated by the column command when the column command is marked as true (when the column command is a write command, it further involves sending the write data to the memory). However, when the column command output by the final arbiter is marked as false, the departure and response queue 940 discards the column command marked as false and does not send it to the memory. The cases that the column command is marked as true or false can refer to the description in the corresponding part above, and details will not be expanded here.

In a further optional implementation, because there is no true or false label for the row command, the embodiment of the present disclosure needs to ensure that the row commands output by the final arbiter (the non-replicated row command and the replicated row command) can actually be sent to the memory; and therefore, when the command output by the final arbiter is a row command, the departure and response queue 940 can send the row command output by the final arbiter to the memory according to the pseudo channel indicated by the row command output by the final arbiter.

In a further optional implementation, the departure and response queue 940 can not only send the command output by the final arbiter to the memory, but also receive the read data returned from the memory after sending the read command to the memory; and the read data corresponds to the column command of the read operation output by the final arbiter, so that the departure and response queue 940 can decide, based on the data length of the memory access request corresponding to the column command of the read operation, whether to directly return the received read data to the processor core or wait for read data with sufficient data length being collected before returning the read data to the processor core.

In an implementation example, if the data length of the memory access request corresponding to the column command of a read operation is the second data length (e.g., 64 bytes), then base on that the data supported for transmission at one time has the first data length (e.g., 32 bytes), the departure and response queue 940 can firstly cache the read data corresponding to the column command of one read operation, and then return the read data corresponding to the column command of the next read operation (i.e., the read data returned during the next clock cycle) and the cached read data to the processor core together; and the column command of one read operation corresponds to reading the read data of the first data length.

That is, for a read request with the second data length (e.g., 64 bytes), the read data with the first data length (e.g., 32 bytes) returned by the first read command of the read request can be cached, and the read data with the first data length (e.g., 32 bytes) returned by the second read command (which can be a replicated read command) of the read request during the next clock cycle may not be cached; instead, the read data returned by the second read command can be sent to the processor core together with the cached read data of the first read command, thereby meeting the read requirements of the second data length (e.g., 64 bytes) of the processor core. In an optional implementation, a read data cache can be set in the departure and response queue 940, so as to cache the read data; because the length of data to be cached in the read data cache is the first data length (e.g., 32 bytes), the depth of the read data cache can at least support the column command of one read operation, and the width of the read data cache at least corresponds to the first data length; for example, the data cache amount of the read data cache can be set to correspond to the first data length (e.g., 32 bytes); of course, the embodiment of the present disclosure can also support that the data cache amount of the read data cache is greater than the first data length (e.g., 32 bytes).

Further, if the data length of the memory access request corresponding to the column command of the read operation is the first data length, the departure and response queue 940 can directly return the read data to the processor core.

In a further optional implementation, as an example, the departure and response queue 940 can send the command output from the final arbiter and the write data (for the write command) obtained from the write data cache 920 to the second interface 950 according to rules (for example, the departure and response queue 940 decodes the command into a format required by the memory such as HBM3 or the like, and sends it to the second interface 950 according to the rules required by the memory such as HBM3 or the like), so that they are delivered to the memory through the second interface 950 and the memory physical layer. For the read request issued by the processor core, the departure and response queue 940 also receives the read data returned from the memory. In case of a 64-byte read request, the departure and response queue 940 firstly stores the returned 32-byte read data in the internal read data cache, and sends, after the next 32-byte read data is collected, the next 32-byte read data to the processor core together with the cached 32-byte read data in the read data cache. In case of a 32-byte read request, the departure and response queue 940 can directly send the returned 32-byte read data to the processor core. It should be noted that because the read commands corresponding to a 64-byte read request is sent to the memory during two consecutive clock cycles (during one clock cycle, a non-replicated read command is sent to the memory, and during the next clock cycle, a replicated read command is sent to the memory), the departure and response queue 940 can set a read data cache with a depth of 1 (for example, supporting one read command) and a width of 32 bytes. Further, the departure and response queue 940 can discard the column commands marked as false output by the final arbiter without sending them to the memory.

The second interface 950 is an interface of the memory controller for connection with the memory physical layer. The second interface 950 can adopt the DFI (DDR PHY Interface, DDR physical layer interface) standard or the like. DFI can be regarded as an interface standard connecting the memory controller and the memory physical layer, and serves as a bridge between the memory controller and the memory physical layer, thus ensuring the normal communication and mutual coordination between the memory controller and the memory physical layer.

It should be noted that the memory access request of the embodiment of the present disclosure may not be limited to 64-byte and 32-byte, and for example, the embodiment of the present disclosure can also support a 128-byte memory access request. For example, the 128-byte memory access request can be cooperatively scheduled using two 64-byte memory channels; for example, the 128-byte memory access request is distributed to two memory channels, and one memory channel processes a 64-byte memory access request, so that the two memory channels handle 64-byte memory access requests respectively to meet the 128-byte memory access requirement. The way in which the memory controller controls the zero pseudo channel and the first pseudo channel of one memory channel to handle the 64-byte memory access request can refer to the description of the corresponding part above, and details will not be expanded here.

The embodiment of the present disclosure realizes the cooperative control of the zeroth pseudo channel and the first pseudo channel through a set of control logic in the memory controller, and reduces the number of control logic circuits used by the memory controller (for example, the number of timing check modules, page recording modules, queue arbiters, refresh control modules and other control logic circuit related to arbitration can be halved), thereby reducing the overhead of the memory controller. At the same time, the embodiment of the present disclosure can preserve the correctness of memory access by ensuring the consistency of the timing and page status of the zeroth pseudo channel and the first pseudo channel. Moreover, for a memory access request with the second data length (e.g., 64 bytes), the two read data with the first data length (e.g., 32 bytes) successively returned from the memory by the memory access request differ by only one clock cycle, so the depth of the read data cache can be set to support one read command, thus reducing the depth of the read data cache.

An embodiment of the present disclosure further provides a chip, such as a system-on-chip. Referring to Fig. 1, the chip includes at least one processor core, the memory controller as described in fig.2, a memory physical layer, and a memory;
wherein the at least one processor core is connected with the at least one memory controller; the memory physical layer comprises a memory channel, and the memory channel comprises the zeroth pseudo channel and the first pseudo channel; data is transmitted between the memory controller and the memory through the memory channel; the memory controller in the chip is the memory controller provided by the embodiment of the present disclosure.

An embodiment of the present disclosure further provides an electronic device, such as a terminal device or a server device. The electronic device includes a chip provided by the previously described embodiment of the present disclosure or a memory controller provided by the previously described embodiment of the present disclosure.

The above describes numerous solutions provided by the embodiments of the present disclosure, and the various methods introduced by these solutions can be combined and cross-referenced with each other on a non-conflicting basis, thereby obtaining a variety of possible solutions, which are considered as solutions disclosed in the embodiments of the present disclosure.

Although the embodiments of the present disclosure are disclosed as above, the present disclosure is not limited thereto. Therefore, the protection scope of the present disclosure should be based on the protection scope defined by the claims.

## Claims

1. A memory controller (120), wherein the memory controller (120) is configured to transmit data to and from a memory (140) through a memory channel (131), the memory channel (131) comprises a zeroth pseudo channel (0) and a first pseudo channel (1); the memory controller (120) comprises a common control logic circuit (210), a final arbiter (230) and a command replicator (220); wherein:
the common control logic circuit (210) is shared by the zeroth pseudo channel (0) and the first pseudo channel (1), and the common control logic circuit (210) is configured to determine a request command corresponding to a memory access request and send the request command to the final arbiter (230);
the command replicator (220) is configured to replicate, when a command output by the final arbiter (230) is a non-replicated request command and the request command meets a preset replication condition, the request command to obtain a corresponding replicated request command, and to send the replicated request command to the final arbiter (230); and
the final arbiter (230) is configured to conduct final arbitration on a command sent to the final arbiter (230); if the command passed by the final arbitration is a non-replicated request command, output the request command and indicate transmission through the zeroth pseudo channel (0); and during at least one clock cycle after outputting the non-replicated request command, finally arbitrate to pass the corresponding replicated request command, output the replicated request command and indicate transmission through the first pseudo channel (1);
wherein the non-replicated request command comes from the common control logic circuit (210), and the replicated request command comes from the command replicator (220).

2. The memory controller (120) according to claim 1, wherein the memory (140) comprises a plurality of blocks, and each of the blocks are an array formed by rows and columns; the request command corresponding to the memory access request is divided into a row command and a column command; the row command is used to control at least a block where a row pointed by the memory access request is located, and the column command is used to perform a memory access operation on a column in the row pointed by the memory access request.

3. The memory controller (120) according to claim 2, wherein the command replicator (220) being configured to replicate, when a command output by the final arbiter (230) is a non-replicated request command and the request command meets a preset replication condition, the request command to obtain a corresponding replicated request command is configured to:
replicate
when the command output by the final arbiter (230) is the non-replicated request command and is a column command other than a column command marked as true and originating from a memory access request with a first data length, the request command to obtain the corresponding replicated request command; wherein the first data length is a data length of data that one pseudo channel supports to transmit.

4. The memory controller (120) according to claim 3, wherein the final arbiter (230) is further configured to mark, when the output request command is a column command and a condition is met, the output column command as false; the condition comprises that the column command output by the final arbiter (230) is a non-replicated column command, a data length of the memory access request corresponding to the column command is the first data length, and the pseudo channel indicated by the memory access request corresponding to the column command is the first pseudo channel (1); and to mark the output column command as true when the output request command is a column command and the condition is not met;
wherein the column command marked as truth is actually sent to the memory (140) after being output by the final arbiter (230), and the column command marked as false is discarded after being output by the final arbiter (230).

5. The memory controller (120) according to claim 3, wherein the final arbiter (230) comprises a column command arbiter and a row command arbiter;
wherein the column command arbiter is configured to conduct final arbitration on a column command sent to the final arbiter (230); if the column command passed by the final arbitration is a non-replicated column command, output the column command and indicate transmission through the zeroth pseudo channel (0); and if the output non-replicated column command has a corresponding replicated column command, finally arbitrate to pass the corresponding replicated column command during at least one clock cycle after outputting the non-replicated column command, and output the replicated column command and indicate transmission through the first pseudo channel (1);
the row command arbiter is configured to conduct final arbitration on a row command sent to the final arbiter (230); if the row command passed by the final arbitration is a non-replicated row command, output the row command and indicate transmission through the zeroth pseudo channel (0); and during at least one clock cycle after outputting the non-replicated row command, output a corresponding replicated row command and indicate transmission through the first pseudo channel (1).

6. The memory controller (120) according to claim 5, wherein the command replicator (220) being configured to replicate when the command output by the final arbiter (230) is the non-replicated request command and is a column command other than a column command marked as true and originating from a memory access request with a first data length, the request command to obtain the corresponding replicated request command, is configured to:
replicate when the column command arbiter outputs the non-replicated column command and the column command is a column command other than a column command marked as true and originating from the memory access request with the first data length, the column command to obtain the corresponding replicated column command.

7. The memory controller (120) according to claim 6, wherein the column command arbiter being configured, if the column command passed by the final arbitration is a non-replicated column command, to output the column command and indicate transmission through the zeroth pseudo channel (0), is configured to:
output if the column command passed by the final arbitration is a non-replicated column command, a data length of the memory access request corresponding to the column command is the first data length, and a pseudo channel indicated by the memory access request is the zeroth pseudo channel (0), the column command with a pseudo channel address belonging to the zeroth pseudo channel (0) and marked as true during a current clock cycle, wherein the final arbiter (230) is occupied by the command replicator (220) during a next clock cycle, but does not output a column command; or
output, if the column command passed by the final arbitration is a non-replicated column command, a data length of the memory access request corresponding to the column command is the first data length, and a pseudo channel indicated by the memory access request is the first pseudo channel (1), the column command with a pseudo channel address belonging to the zeroth pseudo channel (0) and marked as false during a current clock cycle; the column command arbiter being configured, if the output non-replicated column command has a corresponding replicated column command, to finally arbitrate to pass the corresponding replicated column command during at least one clock cycle after outputting the non-replicated column command, and output the replicated column command and indicate transmission through the first pseudo channel (1), by finally arbitrating, if the output column command is a non-replicated column command, the data length of the memory access request corresponding to the column command is the first data length, and the pseudo channel indicated by the memory access request is the first pseudo channel (1), to pass the corresponding replicated column command during a next clock cycle, and outputting the replicated column command with a pseudo channel address belonging to the first pseudo channel (1) and marked as true; or
output, if the column command passed by the final arbitration is a non-replicated column command and a data length of the memory access request corresponding to the column command is a second data length, the column command with a pseudo channel address belonging to the zeroth pseudo channel (0) and marked as true during a current clock cycle, wherein the second data length is a total data length of data that the zeroth pseudo channel (0) and the first pseudo channel (1) comprised in the memory channel (131) support to transmit; the column command arbiter being configured, if the output non-replicated column command has a corresponding replicated column command, to finally arbitrate to pass the corresponding replicated column command during at least one clock cycle after outputting the non-replicated column command, and output the replicated column command and indicate transmission through the first pseudo channel (1), and being further configured to: arbitrate, if the output column command is a non-replicated column command and a data length of the memory access request corresponding to the column command is the second data length, to pass the corresponding replicated column command during a next clock cycle, and output the replicated column command with a pseudo channel address belonging to the first pseudo channel (1) and marked as true.

8. The memory controller (120) according to claim 5, wherein if the column command output by the column command arbiter originates from a memory access request with the first data length, the column command does not carry an automatic pre-charge instruction; if the column command output by the column command arbiter originates from a memory access request with a second data length, the column command does or does not carry the automatic pre-charge instruction.

9. The memory controller (120) according to claim 5, wherein the command replicator (220) being configured to replicate when the command output by the final arbiter (230) is the non-replicated request command and is a column command other than a column command marked as true and originating from a memory access request with a first data length, the request command to obtain the corresponding replicated request command, is configured to:
replicate, when the row command arbiter outputs the non-replicated row command, the row command to obtain the corresponding replicated row command;
the row command arbiter being configured, during at least one clock cycle after outputting the non-replicated row command, output a corresponding replicated row command and indicate transmission through the first pseudo channels (1), is configured to:
select according to the clock cycle that the output non-replicated row command occupies a command bus, a row command participating in the final arbitration during at least one clock cycle after outputting the non-replicated row command, and output the replicated row command and indicate transmission through the first pseudo channel (1).

10. The memory controller (120) according to claim 9, wherein the row command arbiter configured, according to the clock cycle that the output non-replicated row command occupies a command bus, to select a row command participating in the final arbitration during at least one clock cycle after outputting the non-replicated row command, is configured to:
select, if the output non-replicated row command occupies the command bus for 1.5 clock cycles, a row command that does not conflict with the output row command and occupies the command bus for 0.5 clock cycle to participate in the final arbitration during a first clock cycle after a current clock cycle of outputting the non-replicated row command; and prohibiting, during a second clock cycle to a third clock cycle after the current clock cycle, a non-replicated row command from participating in the final arbitration; the row command arbiter being configured to output the replicated row command and indicate transmission through the first pseudo channel (1), is configured to sequentially output, during the second clock cycle to the third clock cycle, according to an input time sequence of replicated row commands during the current clock cycle to the first clock cycle, the replicated row commands and indicate that the pseudo channel address belongs to the first pseudo channel (1); wherein the selected row command that occupies the command bus for 0.5 clock cycle is output by the row command arbiter during 0.5 clock cycle after the first clock cycle, the output row command is replicated by the command replicator (220), and the corresponding replicated row command is output by the row command arbiter during 0.5 clock cycle after the third clock cycle; or
prohibit, if the output non-replicated row command occupies the command bus for 1 clock cycle, a non-replicated row command from participating in the final arbitration during a first clock cycle after a current clock cycle of outputting the non-replicated row command; the row command arbiter being configured to output the replicated row command and indicate transmission through the first pseudo channel (1), is configured to: output during the first clock cycle after the current clock cycle, the corresponding replicated row command and indicate that the pseudo channel address belongs to the first pseudo channel (1); or
select, if the output non-replicated row command occupies the command bus for 0.5 clock cycle, a row command that does not conflict with the output row command and occupies the command bus for 0.5 clock cycle to participate in the final arbitration during a 0.5 clock cycle after a current clock cycle of outputting the row command; and prohibit, during a first clock cycle after the current clock cycle, a non-replicated row command from participating in the final arbitration; the row command arbiter being configured to output the replicated row command and indicate transmission through the first pseudo channel (1), is configured to : sequentially output, during the first clock cycle after the current clock cycle, according to an input time sequence of replicated row commands during the current clock cycle, the replicated row commands and indicate that the pseudo channel address belongs to the first pseudo channel (1); wherein the selected row command that occupies the command bus for 0.5 clock cycle is output by the row command arbiter during the first clock cycle, the output row command is replicated by the command replicator (220), and the corresponding replicated row command is output by the row command arbiter 0.5 clock cycle after the first clock cycle.

11. The memory controller (120) according to any one of claims 1-10, wherein the common control logic circuit (210) is further configured to sample, when the final arbiter (230) outputs a non-replicated command, the command output by the final arbiter (230), and start timing parameter counting for a sampled command based on a counting basis of a timing parameter;
wherein the counting basis of the timing parameter is that for a command occupying the command bus for 1.5 clock cycles, the timing parameter counting is performed with a first clock rising edge when the command is output by the final arbiter (230) as a starting position, so that the timing parameter counting on the command occupying the command bus for 1.5 clock cycles one clock cycle is performed one clock cycle earlier than that on a standard clock cycle;
wherein the common control logic circuit (210) being configured to start timing parameter counting for a sampled command based on a counting basis of a timing parameter, is configured to:
perform, based on the counting basis of the timing parameter, timing parameter counting on a currently sampled command according to a clock cycle variation of sampled adjacent commands occupying the command bus; and
wherein the common control logic circuit (210) being configured to perform, based on the counting basis of the timing parameter, timing parameter counting on a currently sampled command according to a clock cycle variation of sampled adjacent commands occupying the command bus, is configured to:
determine the clock cycle variation of the sampled adjacent commands occupying the command bus;
perform, if the clock cycle variation of the sampled adjacent commands occupying the command bus is any one of 1 clock cycle to 1 clock cycle, 0.5 clock cycle to 0.5 clock cycle, 1.5 clock cycles to 1.5 clock cycles, 1 clock cycle to 0.5 clock cycle, and 0.5 clock cycle to 1 clock cycle, timing parameter counting on the currently sampled command according to the standard clock cycle based on the counting basis of the timing parameter;
perform, if the clock cycle variation of the sampled adjacent commands occupying the command bus is either 1.5 clock cycles to 0.5 clock cycle or 1.5 clock cycles to 1 clock cycle, counting on the currently sampled command according to the standard clock cycle plus 2 clock cycles based on the counting basis of the timing parameter;
perform, if the clock cycle variation of the sampled adjacent commands occupying the command bus is either 0.5 clock cycle to 1.5 clock cycles or 1 clock cycle to 1.5 clock cycles, counting on the currently sampled command according to the standard clock cycle minus 1 clock cycle based on the counting basis of the timing parameter.

12. The memory controller (120) according to claim 11, wherein the common control logic circuit (210) comprises: a common command queue, a common page recording module, a common timing check module, a common refresh control module and a common queue arbiter, shared by the zeroth pseudo channel (0) and the first pseudo channel (1);
the common command queue is configured to store request information of the memory access request;
the common page recording module is configured to record block information of a block in the memory (140);
the common timing check module is configured to execute the step of sampling, when the final arbiter (230) outputs a non-replicated row command, the command output by the final arbiter (230), and starting timing parameter counting for a sampled command based on a counting basis of a timing parameter;
the common refresh control module is configured to manage a refresh operation of the memory (140);
the common queue arbiter is configured to determine the request command corresponding to the memory access request and sent to the final arbiter (230) according to information provided by at least one of the common page recording module, the common timing check module and the common refresh control module, and the request information of the memory access request stored in the common command queue.

13. A memory access method, applied to the memory controller (120) according to any one of claims 1-12, wherein data is transmitted between the memory controller (120) and a memory (140) through a memory channel (131), the memory channel (131) comprises a zeroth pseudo channel (0) and a first pseudo channel (1); the method comprises:
determining (S310) a request command corresponding to a memory access request, wherein the request command corresponding to the memory access request participates in final arbitration;
and replicating (S311), when a command output by the final arbitration is a non-replicated request command and the request command meets a preset replication condition, the request command to obtain a corresponding replicated request command, wherein the replicated request command participates in final arbitration;
conducting (S312) final arbitration on a command participating in final arbitration; if the command passed by the final arbitration is a non-replicated request command, outputting the request command and indicating transmission through the zeroth pseudo channel (0); and during at least one clock cycle after outputting the non-replicated request command, finally arbitrating to pass the corresponding replicated request command, outputting the replicated request command and indicating transmission through the first pseudo channel (1).

14. A chip, comprising: at least one processor core (110), the memory controller (120) according to any one of claims 1-12, a memory physical layer (130), and the memory (140);
wherein the at least one processor core (110) is connected with the memory controller (120); and the memory physical layer (130) comprises the memory channel (131).

15. An electronic device, comprising the chip according to claim 14, or the memory controller (120) according to any one of claims 1-12.

## Patentansprüche

1. Ein Speichercontroller (120), wobei der Speichercontroller (120) dazu konfiguriert ist, Daten über einen Speicherkanal (131) zu und von einem Speicher (140) zu übertragen, der Speicherkanal (131) einen nullten Pseudokanal (0) und einen ersten Pseudokanal (1) umfasst, der Speichercontroller (120) eine gemeinsame Steuerlogikschaltung (210), einen Finalarbiter (230) und einen Befehlsreplikator (220) umfasst, wobei
die gemeinsame Steuerlogikschaltung (210) von dem nullten Pseudokanal (0) und dem ersten Pseudokanal (1) gemeinsam genutzt wird, und die gemeinsame Steuerlogikschaltung (210) dazu konfiguriert ist, einen einer Speicherzugriffsanforderung entsprechenden Anforderungsbefehl zu bestimmen und den Anforderungsbefehl an den Finalarbiter (230) zu senden;
der Befehlsreplikator (220) dazu konfiguriert ist, wenn ein von dem Finalarbiter (230) ausgegebener Befehl ein nicht-replizierter Anforderungsbefehl ist und der Anforderungsbefehl eine voreingestellte Replikationsbedingung erfüllt, den Anforderungsbefehl zu replizieren, um einen entsprechenden replizierten Anforderungsbefehl zu erhalten, und den replizierten Anforderungsbefehl an den Finalarbiter (230) zu senden; und
der Finalarbiter (230) dazu konfiguriert ist, eine Finalarbitrierung für einen an den Finalarbiter (230) gesendeten Befehl durchzuführen; wenn der durch die Finalarbitrierung durchgelassene Befehl ein nicht-replizierter Anforderungsbefehl ist, den Anforderungsbefehl auszugeben und eine Übertragung über den nullten Pseudokanal (0) anzuzeigen; und während mindestens eines Taktzyklus nach dem Ausgeben des nicht-replizierten Anforderungsbefehls, final zu arbitrieren, um den entsprechenden replizierten Anforderungsbefehl durchzulassen, den replizierten Anforderungsbefehl auszugeben und eine Übertragung über den ersten Pseudokanal (1) anzuzeigen;
wobei der nicht-replizierte Anforderungsbefehl von der gemeinsamen Steuerlogikschaltung (210) stammt, und der replizierte Anforderungsbefehl von dem Befehlsreplikator (220) stammt.

2. Der Speichercontroller (120) nach Anspruch 1, wobei der Speicher (140) eine Vielzahl von Blöcken umfasst, und jeder der Blöcke ein aus Zeilen und Spalten gebildetes Array ist; der der Speicherzugriffsanforderung entsprechende Anforderungsbefehl in einen Zeilenbefehl und einen Spaltenbefehl unterteilt ist; der Zeilenbefehl dazu verwendet wird, mindestens einen Block zu steuern, in dem sich eine durch die Speicherzugriffsanforderung angegebene Zeile befindet, und der Spaltenbefehl dazu verwendet wird, einen Speicherzugriffsvorgang an einer Spalte in der durch die Speicherzugriffsanforderung angegebenen Zeile durchzuführen.

3. Der Speichercontroller (120) nach Anspruch 2, wobei der Befehlsreplikator (220), der dazu konfiguriert ist, wenn ein von dem Finalarbiter (230) ausgegebener Befehl ein nicht-replizierter Anforderungsbefehl ist und der Anforderungsbefehl eine voreingestellte Replikationsbedingung erfüllt, den Anforderungsbefehl zu replizieren, um einen entsprechenden replizierten Anforderungsbefehl zu erhalten, dazu konfiguriert ist:
wenn der von dem Finalarbiter (230) ausgegebene Befehl der nicht-replizierte Anforderungsbefehl ist und ein Spaltenbefehl ist, der nicht ein als wahr markierter und von einer Speicherzugriffsanforderung mit einer ersten Datenlänge stammender Spaltenbefehl ist, den Anforderungsbefehl zu replizieren, um den entsprechenden replizierten Anforderungsbefehl zu erhalten; wobei die erste Datenlänge eine Datenlänge von Daten ist, deren Übertragung ein Pseudokanal unterstützt.

4. Der Speichercontroller (120) nach Anspruch 3, wobei der Finalarbiter (230) ferner dazu konfiguriert ist, wenn der ausgegebene Anforderungsbefehl ein Spaltenbefehl ist und eine Bedingung erfüllt ist, den ausgegebenen Spaltenbefehl als falsch zu markieren; die Bedingung umfasst, dass der von dem Finalarbiter (230) ausgegebene Spaltenbefehl ein nicht-replizierter Spaltenbefehl ist, eine Datenlänge der dem Spaltenbefehl entsprechenden Speicherzugriffsanforderung die erste Datenlänge ist, und der durch die dem Spaltenbefehl entsprechende Speicherzugriffsanforderung angegebene Pseudokanal der erste Pseudokanal (1) ist; und den ausgegebenen Spaltenbefehl als wahr zu markieren, wenn der ausgegebene Anforderungsbefehl ein Spaltenbefehl ist und die Bedingung nicht erfüllt ist;
wobei der als wahr markierte Spaltenbefehl nach dem Ausgeben durch den Finalarbiter (230) tatsächlich an den Speicher (140) gesendet wird, und der als falsch markierte Spaltenbefehl nach dem Ausgeben durch den Finalarbiter (230) verworfen wird.

5. Der Speichercontroller (120) nach Anspruch 3, wobei der Finalarbiter (230) einen Spaltenbefehlsarbiter und einen Zeilenbefehlsarbiter umfasst;
wobei der Spaltenbefehlsarbiter dazu konfiguriert ist, eine Finalarbitrierung für einen an den Finalarbiter (230) gesendeten Spaltenbefehl durchzuführen; wenn der durch die Finalarbitrierung durchgelassene Spaltenbefehl ein nicht-replizierter Spaltenbefehl ist, den Spaltenbefehl auszugeben und eine Übertragung über den nullten Pseudokanal (0) anzuzeigen; und wenn der ausgegebene nicht-replizierte Spaltenbefehl einen entsprechenden replizierten Spaltenbefehl aufweist, während mindestens eines Taktzyklus nach dem Ausgeben des nicht-replizierten Spaltenbefehls final zu arbitrieren, um den entsprechenden replizierten Spaltenbefehl durchzulassen, und den replizierten Spaltenbefehl auszugeben und eine Übertragung über den ersten Pseudokanal (1) anzuzeigen;
der Zeilenbefehlsarbiter dazu konfiguriert ist, eine Finalarbitrierung für einen an den Finalarbiter (230) gesendeten Zeilenbefehl durchzuführen; wenn der durch die Finalarbitrierung durchgelassene Zeilenbefehl ein nicht-replizierter Zeilenbefehl ist, den Zeilenbefehl auszugeben und eine Übertragung über den nullten Pseudokanal (0) anzuzeigen; und während mindestens eines Taktzyklus nach dem Ausgeben des nicht-replizierten Zeilenbefehls einen entsprechenden replizierten Zeilenbefehl auszugeben und eine Übertragung über den ersten Pseudokanal (1) anzuzeigen.

6. Der Speichercontroller (120) nach Anspruch 5, wobei der Befehlsreplikator (220), der dazu konfiguriert ist, wenn der von dem Finalarbiter (230) ausgegebene Befehl der nicht-replizierte Anforderungsbefehl ist und ein Spaltenbefehl ist, der nicht ein als wahr markierter und von einer Speicherzugriffsanforderung mit einer ersten Datenlänge stammender Spaltenbefehl ist, den Anforderungsbefehl zu replizieren, um den entsprechenden replizierten Anforderungsbefehl zu erhalten, dazu konfiguriert ist:
wenn der Spaltenbefehlsarbiter den nicht-replizierten Spaltenbefehl ausgibt und der Spaltenbefehl ein Spaltenbefehl ist, der nicht ein als wahr markierter und von der Speicherzugriffsanforderung mit der ersten Datenlänge stammender Spaltenbefehl ist, den Spaltenbefehl zu replizieren, um den entsprechenden replizierten Spaltenbefehl zu erhalten.

7. Der Speichercontroller (120) nach Anspruch 6, wobei der Spaltenbefehlsarbiter, der dazu konfiguriert ist, wenn der durch die Finalarbitrierung durchgelassene Spaltenbefehl ein nicht-replizierter Spaltenbefehl ist, den Spaltenbefehl auszugeben und eine Übertragung über den nullten Pseudokanal (0) anzuzeigen, ferner dazu konfiguriert ist:
wenn der durch die Finalarbitrierung durchgelassene Spaltenbefehl ein nicht-replizierter Spaltenbefehl ist, eine Datenlänge der dem Spaltenbefehl entsprechenden Speicherzugriffsanforderung die erste Datenlänge ist, und ein durch die Speicherzugriffsanforderung angegebener Pseudokanal der nullte Pseudokanal (0) ist, während eines aktuellen Taktzyklus den Spaltenbefehl mit einer zu dem nullten Pseudokanal (0) gehörenden Pseudokanaladresse und als wahr markiert auszugeben, wobei der Finalarbiter (230) während eines nächsten Taktzyklus durch den Befehlsreplikator (220) belegt ist, jedoch keinen Spaltenbefehl ausgibt; oder
wenn der durch die Finalarbitrierung durchgelassene Spaltenbefehl ein nicht-replizierter Spaltenbefehl ist, eine Datenlänge der dem Spaltenbefehl entsprechenden Speicherzugriffsanforderung die erste Datenlänge ist, und ein durch die Speicherzugriffsanforderung angegebener Pseudokanal der erste Pseudokanal (1) ist, während eines aktuellen Taktzyklus den Spaltenbefehl mit einer zu dem nullten Pseudokanal (0) gehörenden Pseudokanaladresse und als falsch markiert auszugeben; wobei der Spaltenbefehlsarbiter dazu konfiguriert ist, wenn der ausgegebene nicht-replizierte Spaltenbefehl einen entsprechenden replizierten Spaltenbefehl aufweist, während mindestens eines Taktzyklus nach dem Ausgeben des nicht-replizierten Spaltenbefehls final zu arbitrieren, um den entsprechenden replizierten Spaltenbefehl durchzulassen, und den replizierten Spaltenbefehl auszugeben und eine Übertragung über den ersten Pseudokanal (1) anzuzeigen, durch finales Arbitrieren, wenn der ausgegebene Spaltenbefehl ein nicht-replizierter Spaltenbefehl ist, die Datenlänge der dem Spaltenbefehl entsprechenden Speicherzugriffsanforderung die erste Datenlänge ist, und der durch die Speicherzugriffsanforderung angegebene Pseudokanal der erste Pseudokanal (1) ist, um während eines nächsten Taktzyklus den entsprechenden replizierten Spaltenbefehl durchzulassen, und den replizierten Spaltenbefehl mit einer zu dem ersten Pseudokanal (1) gehörenden Pseudokanaladresse und als wahr markiert auszugeben; oder
wenn der durch die Finalarbitrierung durchgelassene Spaltenbefehl ein nicht-replizierter Spaltenbefehl ist und eine Datenlänge der dem Spaltenbefehl entsprechenden Speicherzugriffsanforderung eine zweite Datenlänge ist, während eines aktuellen Taktzyklus den Spaltenbefehl mit einer zu dem nullten Pseudokanal (0) gehörenden Pseudokanaladresse und als wahr markiert auszugeben, wobei die zweite Datenlänge eine Gesamtdatenlänge von Daten ist, deren Übertragung der in dem Speicherkanal (131) enthaltene nullte Pseudokanal (0) und der in dem Speicherkanal (131) enthaltene erste Pseudokanal (1) unterstützen; der Spaltenbefehlsarbiter, der dazu konfiguriert ist, wenn der ausgegebene nicht-replizierte Spaltenbefehl einen entsprechenden replizierten Spaltenbefehl aufweist, während mindestens eines Taktzyklus nach dem Ausgeben des nicht-replizierten Spaltenbefehls final zu arbitrieren, um den entsprechenden replizierten Spaltenbefehl durchzulassen, und den replizierten Spaltenbefehl auszugeben und eine Übertragung über den ersten Pseudokanal (1) anzuzeigen, und der ferner dazu konfiguriert ist: wenn der ausgegebene Spaltenbefehl ein nicht-replizierter Spaltenbefehl ist und eine Datenlänge der dem Spaltenbefehl entsprechenden Speicherzugriffsanforderung die zweite Datenlänge ist, während eines nächsten Taktzyklus zu arbitrieren, um den entsprechenden replizierten Spaltenbefehl durchzulassen, und den replizierten Spaltenbefehl mit einer zu dem ersten Pseudokanal (1) gehörenden Pseudokanaladresse und als wahr markiert auszugeben.

8. Der Speichercontroller (120) nach Anspruch 5, wobei, wenn der von dem Spaltenbefehlsarbiter ausgegebene Spaltenbefehl von einer Speicherzugriffsanforderung mit der ersten Datenlänge stammt, der Spaltenbefehl keine automatische Precharge-Anweisung trägt; wenn der von dem Spaltenbefehlsarbiter ausgegebene Spaltenbefehl von einer Speicherzugriffsanforderung mit einer zweiten Datenlänge stammt, der Spaltenbefehl die automatische Precharge-Anweisung trägt oder nicht trägt.

9. Der Speichercontroller (120) nach Anspruch 5, wobei der Befehlsreplikator (220), der dazu konfiguriert ist, wenn der von dem Finalarbiter (230) ausgegebene Befehl der nicht-replizierte Anforderungsbefehl ist und ein Spaltenbefehl ist, der nicht ein als wahr markierter und von einer Speicherzugriffsanforderung mit einer ersten Datenlänge stammender Spaltenbefehl ist, den Anforderungsbefehl zu replizieren, um den entsprechenden replizierten Anforderungsbefehl zu erhalten, dazu konfiguriert ist:
wenn der Zeilenbefehlsarbiter den nicht-replizierten Zeilenbefehl ausgibt, den Zeilenbefehl zu replizieren, um den entsprechenden replizierten Zeilenbefehl zu erhalten;
der Zeilenbefehlsarbiter, der dazu konfiguriert ist, während mindestens eines Taktzyklus nach dem Ausgeben des nicht-replizierten Zeilenbefehls, einen entsprechenden replizierten Zeilenbefehl auszugeben und eine Übertragung über den ersten Pseudokanal (1) anzuzeigen, dazu konfiguriert ist:
gemäß dem Taktzyklus, für den der ausgegebene nicht-replizierte Zeilenbefehl einen Befehlsbus belegt, während mindestens eines Taktzyklus nach dem Ausgeben des nicht-replizierten Zeilenbefehls einen an der Finalarbitrierung teilnehmenden Zeilenbefehl auszuwählen, und den replizierten Zeilenbefehl auszugeben und eine Übertragung über den ersten Pseudokanal (1) anzuzeigen.

10. Der Speichercontroller (120) nach Anspruch 9, wobei der Zeilenbefehlsarbiter, der dazu konfiguriert ist, gemäß dem Taktzyklus, für den der ausgegebene nicht-replizierte Zeilenbefehl einen Befehlsbus belegt, während mindestens eines Taktzyklus nach dem Ausgeben des nicht-replizierten Zeilenbefehls einen an der Finalarbitrierung teilnehmenden Zeilenbefehl auszuwählen, dazu konfiguriert ist:
wenn der ausgegebene nicht-replizierte Zeilenbefehl den Befehlsbus für 1,5 Taktzyklen belegt, während eines ersten Taktzyklus nach einem aktuellen Taktzyklus des Ausgebens des nicht-replizierten Zeilenbefehls einen Zeilenbefehl auszuwählen, der nicht mit dem ausgegebenen Zeilenbefehl in Konflikt steht und den Befehlsbus für 0,5 Taktzyklen belegt, um an der Finalarbitrierung teilzunehmen; und während eines zweiten Taktzyklus bis zu einem dritten Taktzyklus nach dem aktuellen Taktzyklus zu verhindern, dass ein nicht-replizierter Zeilenbefehl an der Finalarbitrierung teilnimmt; der Zeilenbefehlsarbiter, der dazu konfiguriert ist, den replizierten Zeilenbefehl auszugeben und eine Übertragung über den ersten Pseudokanal (1) anzuzeigen, dazu konfiguriert ist, während des zweiten Taktzyklus bis zu dem dritten Taktzyklus gemäß einer Eingangszeitfolge von replizierten Zeilenbefehlen während des aktuellen Taktzyklus bis zu dem ersten Taktzyklus die replizierten Zeilenbefehle sequenziell auszugeben und anzuzeigen, dass die Pseudokanaladresse zu dem ersten Pseudokanal (1) gehört; wobei der ausgewählte Zeilenbefehl, der den Befehlsbus für 0,5 Taktzyklen belegt, von dem Zeilenbefehlsarbiter während 0,5 Taktzyklen nach dem ersten Taktzyklus ausgegeben wird, der ausgegebene Zeilenbefehl durch den Befehlsreplikator (220) repliziert wird, und der entsprechende replizierte Zeilenbefehl von dem Zeilenbefehlsarbiter während 0,5 Taktzyklen nach dem dritten Taktzyklus ausgegeben wird; oder
wenn der ausgegebene nicht-replizierte Zeilenbefehl den Befehlsbus für 1 Taktzyklus belegt, während eines ersten Taktzyklus nach einem aktuellen Taktzyklus des Ausgebens des nicht-replizierten Zeilenbefehls zu verhindern, dass ein nicht-replizierter Zeilenbefehl an der Finalarbitrierung teilnimmt; der Zeilenbefehlsarbiter, der dazu konfiguriert ist, den replizierten Zeilenbefehl auszugeben und eine Übertragung über den ersten Pseudokanal (1) anzuzeigen, dazu konfiguriert ist: während des ersten Taktzyklus nach dem aktuellen Taktzyklus den entsprechenden replizierten Zeilenbefehl auszugeben und anzuzeigen, dass die Pseudokanaladresse zu dem ersten Pseudokanal (1) gehört; oder
wenn der ausgegebene nicht-replizierte Zeilenbefehl den Befehlsbus für 0,5 Taktzyklen belegt, während 0,5 Taktzyklen nach einem aktuellen Taktzyklus des Ausgebens des Zeilenbefehls einen Zeilenbefehl auszuwählen, der nicht mit dem ausgegebenen Zeilenbefehl in Konflikt steht und den Befehlsbus für 0,5 Taktzyklen belegt, um an der Finalarbitrierung teilzunehmen, und während eines ersten Taktzyklus nach dem aktuellen Taktzyklus zu verhindern, dass ein nicht-replizierter Zeilenbefehl an der Finalarbitrierung teilnimmt; der Zeilenbefehlsarbiter, der dazu konfiguriert ist, den replizierten Zeilenbefehl auszugeben und eine Übertragung über den ersten Pseudokanal (1) anzuzeigen, dazu konfiguriert ist: während des ersten Taktzyklus nach dem aktuellen Taktzyklus gemäß einer Eingangszeitfolge von replizierten Zeilenbefehlen während des aktuellen Taktzyklus die replizierten Zeilenbefehle sequenziell auszugeben und anzuzeigen, dass die Pseudokanaladresse zu dem ersten Pseudokanal (1) gehört; wobei der ausgewählte Zeilenbefehl, der den Befehlsbus für 0,5 Taktzyklen belegt, von dem Zeilenbefehlsarbiter während des ersten Taktzyklus ausgegeben wird, der ausgegebene Zeilenbefehl durch den Befehlsreplikator (220) repliziert wird, und der entsprechende replizierte Zeilenbefehl von dem Zeilenbefehlsarbiter 0,5 Taktzyklen nach dem ersten Taktzyklus ausgegeben wird.

11. Der Speichercontroller (120) nach einem der Ansprüche 1 bis 10, wobei die gemeinsame Steuerlogikschaltung (210) ferner dazu konfiguriert ist, wenn der Finalarbiter (230) einen nicht-replizierten Befehl ausgibt, den von dem Finalarbiter (230) ausgegebenen Befehl abzutasten und eine Zeitparameterzählung für einen abgetasteten Befehl auf Grundlage einer Zählbasis eines Zeitparameters zu starten;
wobei die Zählbasis des Zeitparameters darin besteht, dass bei einem Befehl, der den Befehlsbus für 1,5 Taktzyklen belegt, die Zeitparameterzählung mit einer ersten steigenden Taktflanke zu dem Zeitpunkt, zu dem der Befehl von dem Finalarbiter (230) ausgegeben wird, als eine Startposition durchgeführt wird, sodass die Zeitparameterzählung für den Befehl, der den Befehlsbus für 1,5 Taktzyklen belegt, gegenüber einem Standardtaktzyklus um einen Taktzyklus früher durchgeführt wird;
wobei die gemeinsame Steuerlogikschaltung (210), die dazu konfiguriert ist, die Zeitparameterzählung für einen abgetasteten Befehl auf Grundlage einer Zählbasis eines Zeitparameters zu starten, dazu konfiguriert ist:
auf Grundlage der Zählbasis des Zeitparameters eine Zeitparameterzählung für einen aktuell abgetasteten Befehl gemäß einer Taktzyklusänderung von abgetasteten benachbarten Befehlen, die den Befehlsbus belegen, durchzuführen; und
wobei die gemeinsame Steuerlogikschaltung (210), die dazu konfiguriert ist, auf Grundlage der Zählbasis des Zeitparameters eine Zeitparameterzählung für einen aktuell abgetasteten Befehl gemäß einer Taktzyklusänderung von abgetasteten benachbarten Befehlen, die den Befehlsbus belegen, durchzuführen, dazu konfiguriert ist:
die Taktzyklusänderung der abgetasteten benachbarten Befehle, die den Befehlsbus belegen, zu bestimmen;
wenn die Taktzyklusänderung der abgetasteten benachbarten Befehle, die den Befehlsbus belegen, eine von 1 Taktzyklus zu 1 Taktzyklus, von 0,5 Taktzyklen zu 0,5 Taktzyklen, von 1,5 Taktzyklen zu 1,5 Taktzyklen, von 1 Taktzyklus zu 0,5 Taktzyklen, und von 0,5 Taktzyklen zu 1 Taktzyklus ist, eine Zeitparameterzählung für den aktuell abgetasteten Befehl gemäß dem Standardtaktzyklus auf Grundlage der Zählbasis des Zeitparameters durchzuführen;
wenn die Taktzyklusänderung der abgetasteten benachbarten Befehle, die den Befehlsbus belegen, entweder von 1,5 Taktzyklen zu 0,5 Taktzyklen oder von 1,5 Taktzyklen zu 1 Taktzyklus ist, eine Zählung für den aktuell abgetasteten Befehl gemäß dem Standardtaktzyklus plus 2 Taktzyklen auf Grundlage der Zählbasis des Zeitparameters durchzuführen;
wenn die Taktzyklusänderung der abgetasteten benachbarten Befehle, die den Befehlsbus belegen, entweder von 0,5 Taktzyklen zu 1,5 Taktzyklen oder von 1 Taktzyklus zu 1,5 Taktzyklen ist, eine Zählung für den aktuell abgetasteten Befehl gemäß dem Standardtaktzyklus minus 1 Taktzyklus auf Grundlage der Zählbasis des Zeitparameters durchzuführen.

12. Der Speichercontroller (120) nach Anspruch 11, wobei die gemeinsame Steuerlogikschaltung (210) umfasst: eine gemeinsame Befehlswarteschlange, ein gemeinsames Seitenaufzeichnungsmodul, ein gemeinsames Zeitprüfmodul, ein gemeinsames Auffrischungssteuerungsmodul und einen gemeinsamen Warteschlangenarbiter, die von dem nullten Pseudokanal (0) und dem ersten Pseudokanal (1) gemeinsam genutzt werden;
die gemeinsame Befehlswarteschlange dazu konfiguriert ist, Anforderungsinformationen der Speicherzugriffsanforderung zu speichern;
das gemeinsame Seitenaufzeichnungsmodul dazu konfiguriert ist, Blockinformationen eines Blocks in dem Speicher (140) aufzuzeichnen;
das gemeinsame Zeitprüfmodul dazu konfiguriert ist, den Schritt des Abtastens des von dem Finalarbiter (230) ausgegebenen Befehls, wenn der Finalarbiter (230) einen nicht-replizierten Zeilenbefehl ausgibt, und des Startens der Zeitparameterzählung für einen abgetasteten Befehl auf Grundlage einer Zählbasis eines Zeitparameters auszuführen;
das gemeinsame Auffrischungssteuerungsmodul dazu konfiguriert ist, einen Auffrischungsvorgang des Speichers (140) zu verwalten;
der gemeinsame Warteschlangenarbiter dazu konfiguriert ist, den der Speicherzugriffsanforderung entsprechenden und an den Finalarbiter (230) gesendeten Anforderungsbefehl gemäß Informationen, die von mindestens einem von dem gemeinsamen Seitenaufzeichnungsmodul, dem gemeinsamen Zeitprüfmodul und dem gemeinsamen Auffrischungssteuerungsmodul bereitgestellt werden, und den in der gemeinsamen Befehlswarteschlange gespeicherten Anforderungsinformationen der Speicherzugriffsanforderung zu bestimmen.

13. Ein Speicherzugriffsverfahren, angewendet auf den Speichercontroller (120) nach einem der Ansprüche 1 bis 12, wobei Daten zwischen dem Speichercontroller (120) und einem Speicher (140) über einen Speicherkanal (131) übertragen werden, der Speicherkanal (131) einen nullten Pseudokanal (0) und einen ersten Pseudokanal (1) umfasst; wobei das Verfahren umfasst:
Bestimmen (S310) eines einer Speicherzugriffsanforderung entsprechenden Anforderungsbefehls, wobei der der Speicherzugriffsanforderung entsprechende Anforderungsbefehl an einer Finalarbitrierung teilnimmt;
und Replizieren (S311) des Anforderungsbefehls, wenn ein durch die Finalarbitrierung ausgegebener Befehl ein nicht-replizierter Anforderungsbefehl ist und der Anforderungsbefehl eine voreingestellte Replikationsbedingung erfüllt, um einen entsprechenden replizierten Anforderungsbefehl zu erhalten, wobei der replizierte Anforderungsbefehl an der Finalarbitrierung teilnimmt;
Durchführen (S312) einer Finalarbitrierung für einen an der Finalarbitrierung teilnehmenden Befehl; wenn der durch die Finalarbitrierung durchgelassene Befehl ein nicht-replizierter Anforderungsbefehl ist, Ausgeben des Anforderungsbefehls und Anzeigen einer Übertragung über den nullten Pseudokanal (0); und während mindestens eines Taktzyklus nach dem Ausgeben des nicht-replizierten Anforderungsbefehls, finales Arbitrieren, um den entsprechenden replizierten Anforderungsbefehl durchzulassen, Ausgeben des replizierten Anforderungsbefehls und Anzeigen einer Übertragung über den ersten Pseudokanal (1).

14. Ein Chip, umfassend: mindestens einen Prozessorkern (110), den Speichercontroller (120) nach einem der Ansprüche 1 bis 12, einen Speicher-Physical-Layer (130), und den Speicher (140);
wobei der mindestens eine Prozessorkern (110) mit dem Speichercontroller (120) verbunden ist; und wobei der Speicher-Physical-Layer (130) den Speicherkanal (131) umfasst.

15. Eine elektronische Vorrichtung, umfassend den Chip nach Anspruch 14, oder den Speichercontroller (120) nach einem der Ansprüche 1 bis 12.

## Revendications

1. Contrôleur de mémoire (120), dans lequel le contrôleur de mémoire (120) est configuré pour transmettre des données vers et depuis une mémoire (140) via un canal de mémoire (131), le canal de mémoire (131) comprenant un zéroième pseudo-canal (0) et un premier pseudo-canal (1) ; le contrôleur de mémoire (120) comprenant un circuit logique de contrôle commun (210), un arbitre final (230) et un réplicateur de commandes (220) ; dans lequel :
le circuit logique de contrôle commun (210) est partagé par le zéroième pseudo-canal (0) et le premier pseudo-canal (1), et le circuit logique de contrôle commun (210) est configuré pour déterminer une commande de demande correspondant à une demande d'accès à la mémoire et envoyer la commande de demande à l'arbitre final (230) ;
le réplicateur de commandes (220) est configuré pour répliquer, lorsqu'une commande délivrée en sortie par l'arbitre final (230) est une commande de demande non répliquée et que la commande de demande satisfait une condition de réplication prédéfinie, la commande de demande afin d'obtenir une commande de demande répliquée correspondante, et pour envoyer la commande de demande répliquée à l'arbitre final (230) ; et
l'arbitre final (230) est configuré pour effectuer un arbitrage final sur une commande envoyée à l'arbitre final (230) ; si la commande validée par l'arbitrage final est une commande de demande non répliquée, délivrer en sortie la commande de demande et indiquer la transmission via le zéroième pseudo-canal (0) ; et pendant au moins un cycle d'horloge après la sortie de la commande de demande non répliquée, arbitrer finalement pour valider la commande de demande répliquée correspondante, délivrer en sortie la commande de demande répliquée et indiquer la transmission via le premier pseudo-canal (1) ;
dans lequel la commande de demande non répliquée provient du circuit logique de contrôle commun (210), et la commande de demande répliquée provient du réplicateur de commandes (220).

2. Contrôleur de mémoire (120) selon la revendication 1, dans lequel la mémoire (140) comprend une pluralité de blocs, et chacun des blocs est un réseau formé par des lignes et des colonnes ; la commande de demande correspondant à la demande d'accès à la mémoire est divisée en une commande de ligne et une commande de colonne ; la commande de ligne est utilisée pour contrôler au moins un bloc où se trouve une ligne pointée par la demande d'accès à la mémoire, et la commande de colonne est utilisée pour réaliser une opération d'accès à la mémoire sur une colonne dans la ligne pointée par la demande d'accès à la mémoire.

3. Contrôleur de mémoire (120) selon la revendication 2, dans lequel le réplicateur de commandes (220) configuré pour répliquer, lorsqu'une commande délivrée en sortie par l'arbitre final (230) est une commande de demande non répliquée et que la commande de demande satisfait une condition de réplication prédéfinie, la commande de demande afin d'obtenir une commande de demande répliquée correspondante, est configuré pour :
répliquer, lorsque la commande délivrée en sortie par l'arbitre final (230) est la commande de demande non répliquée et est une commande de colonne autre qu'une commande de colonne marquée comme vraie et provenant d'une demande d'accès à la mémoire avec une première longueur de données, la commande de demande afin d'obtenir la commande de demande répliquée correspondante ; dans lequel la première longueur de données est une longueur de données dont un pseudo-canal prend en charge la transmission.

4. Contrôleur de mémoire (120) selon la revendication 3, dans lequel l'arbitre final (230) est en outre configuré pour marquer, lorsque la commande de demande délivrée en sortie est une commande de colonne et qu'une condition est satisfaite, la commande de colonne délivrée en sortie comme fausse ; la condition comprend le fait que la commande de colonne délivrée en sortie par l'arbitre final (230) est une commande de colonne non répliquée, une longueur de données de la demande d'accès à la mémoire correspondant à la commande de colonne est la première longueur de données, et le pseudo-canal indiqué par la demande d'accès à la mémoire correspondant à la commande de colonne est le premier pseudo-canal (1) ; et pour marquer la commande de colonne délivrée en sortie comme vraie lorsque la commande de demande délivrée en sortie est une commande de colonne et que la condition n'est pas satisfaite ;
dans lequel la commande de colonne marquée comme vraie est effectivement envoyée à la mémoire (140) après avoir été délivrée en sortie par l'arbitre final (230), et la commande de colonne marquée comme fausse est rejetée après avoir été délivrée en sortie par l'arbitre final (230).

5. Contrôleur de mémoire (120) selon la revendication 3, dans lequel l'arbitre final (230) comprend un arbitre de commande de colonne et un arbitre de commande de ligne ;
dans lequel l'arbitre de commande de colonne est configuré pour effectuer un arbitrage final sur une commande de colonne envoyée à l'arbitre final (230) ; si la commande de colonne validée par l'arbitrage final est une commande de colonne non répliquée, délivrer en sortie la commande de colonne et indiquer la transmission via le zéroième pseudo-canal (0) ; et si la commande de colonne non répliquée délivrée en sortie a une commande de colonne répliquée correspondante, arbitrer finalement pour valider la commande de colonne répliquée correspondante pendant au moins un cycle d'horloge après la sortie de la commande de colonne non répliquée, puis délivrer en sortie la commande de colonne répliquée et indiquer la transmission via le premier pseudo-canal (1) ;
l'arbitre de commande de ligne est configuré pour effectuer un arbitrage final sur une commande de ligne envoyée à l'arbitre final (230) ; si la commande de ligne validée par l'arbitrage final est une commande de ligne non répliquée, délivrer en sortie la commande de ligne et indiquer la transmission via le zéroième pseudo-canal (0) ; et pendant au moins un cycle d'horloge après la sortie de la commande de ligne non répliquée, délivrer en sortie une commande de ligne répliquée correspondante et indiquer la transmission via le premier pseudo-canal (1).

6. Contrôleur de mémoire (120) selon la revendication 5, dans lequel le réplicateur de commandes (220) configuré pour répliquer, lorsque la commande délivrée en sortie par l'arbitre final (230) est la commande de demande non répliquée et est une commande de colonne autre qu'une commande de colonne marquée comme vraie et provenant d'une demande d'accès à la mémoire avec une première longueur de données, la commande de demande afin d'obtenir la commande de demande répliquée correspondante, est configuré pour :
répliquer, lorsque l'arbitre de commande de colonne délivre en sortie la commande de colonne non répliquée et que la commande de colonne est une commande de colonne autre qu'une commande de colonne marquée comme vraie et provenant de la demande d'accès à la mémoire avec la première longueur de données, la commande de colonne afin d'obtenir la commande de colonne répliquée correspondante.

7. Contrôleur de mémoire (120) selon la revendication 6, dans lequel l'arbitre de commande de colonne configuré pour, si la commande de colonne validée par l'arbitrage final est une commande de colonne non répliquée, délivrer en sortie la commande de colonne et indiquer la transmission via le zéroième pseudo-canal (0), est configuré pour :
délivrer en sortie, si la commande de colonne validée par l'arbitrage final est une commande de colonne non répliquée, qu'une longueur de données de la demande d'accès à la mémoire correspondant à la commande de colonne est la première longueur de données et qu'un pseudo-canal indiqué par la demande d'accès à la mémoire est le zéroième pseudo-canal (0), la commande de colonne avec une adresse de pseudo-canal appartenant au zéroième pseudo-canal (0) et marquée comme vraie pendant un cycle d'horloge courant, dans lequel l'arbitre final (230) est occupé par le réplicateur de commandes (220) pendant un cycle d'horloge suivant, mais ne délivre pas en sortie de commande de colonne ; ou
délivrer en sortie, si la commande de colonne validée par l'arbitrage final est une commande de colonne non répliquée, qu'une longueur de données de la demande d'accès à la mémoire correspondant à la commande de colonne est la première longueur de données et qu'un pseudo-canal indiqué par la demande d'accès à la mémoire est le premier pseudo-canal (1), la commande de colonne avec une adresse de pseudo-canal appartenant au zéroième pseudo-canal (0) et marquée comme fausse pendant un cycle d'horloge courant ; l'arbitre de commande de colonne étant configuré, si la commande de colonne non répliquée délivrée en sortie a une commande de colonne répliquée correspondante, pour arbitrer finalement pour valider la commande de colonne répliquée correspondante pendant au moins un cycle d'horloge après la sortie de la commande de colonne non répliquée, et délivrer en sortie la commande de colonne répliquée et indiquer la transmission via le premier pseudo-canal (1), en arbitrant finalement, si la commande de colonne délivrée en sortie est une commande de colonne non répliquée, que la longueur de données de la demande d'accès à la mémoire correspondant à la commande de colonne est la première longueur de données et que le pseudo-canal indiqué par la demande d'accès à la mémoire est le premier pseudo-canal (1), pour valider la commande de colonne répliquée correspondante pendant un cycle d'horloge suivant, et délivrer en sortie la commande de colonne répliquée avec une adresse de pseudo-canal appartenant au premier pseudo-canal (1) et marquée comme vraie ; ou
délivrer en sortie, si la commande de colonne validée par l'arbitrage final est une commande de colonne non répliquée et qu'une longueur de données de la demande d'accès à la mémoire correspondant à la commande de colonne est une deuxième longueur de données, la commande de colonne avec une adresse de pseudo-canal appartenant au zéroième pseudo-canal (0) et marquée comme vraie pendant un cycle d'horloge courant, dans lequel la deuxième longueur de données est une longueur totale de données dont le zéroième pseudo-canal (0) et
le premier pseudo-canal (1) compris dans le canal de mémoire (131) prennent en charge la transmission ; l'arbitre de commande de colonne étant configuré, si la commande de colonne non répliquée délivrée en sortie a une commande de colonne répliquée correspondante, pour arbitrer finalement pour valider la commande de colonne répliquée correspondante pendant au moins un cycle d'horloge après la sortie de la commande de colonne non répliquée, et délivrer en sortie la commande de colonne répliquée et indiquer la transmission via le premier pseudo-canal (1), et étant en outre configuré pour : arbitrer, si la commande de colonne délivrée en sortie est une commande de colonne non répliquée et qu'une longueur de données de la demande d'accès à la mémoire correspondant à la commande de colonne est la deuxième longueur de données, pour valider la commande de colonne répliquée correspondante pendant un cycle d'horloge suivant, et délivrer en sortie la commande de colonne répliquée avec une adresse de pseudo-canal appartenant au premier pseudo-canal (1) et marquée comme vraie.

8. Contrôleur de mémoire (120) selon la revendication 5, dans lequel, si la commande de colonne délivrée en sortie par l'arbitre de commande de colonne provient d'une demande d'accès à la mémoire avec la première longueur de données, la commande de colonne ne porte pas d'instruction de précharge automatique ; si la commande de colonne délivrée en sortie par l'arbitre de commande de colonne provient d'une demande d'accès à la mémoire avec une deuxième longueur de données, la commande de colonne porte ou ne porte pas l'instruction de précharge automatique.

9. Contrôleur de mémoire (120) selon la revendication 5, dans lequel le réplicateur de commandes (220) configuré pour répliquer, lorsque la commande délivrée en sortie par l'arbitre final (230) est la commande de demande non répliquée et est une commande de colonne autre qu'une commande de colonne marquée comme vraie et provenant d'une demande d'accès à la mémoire avec une première longueur de données, la commande de demande afin d'obtenir la commande de demande répliquée correspondante, est configuré pour :
répliquer, lorsque l'arbitre de commande de ligne délivre en sortie la commande de ligne non répliquée, la commande de ligne pour obtenir la commande de ligne répliquée correspondante ;
l'arbitre de commande de ligne configuré, pendant au moins un cycle d'horloge après avoir délivré en sortie la commande de ligne non répliquée, délivrer en sortie une commande de ligne répliquée correspondante et indiquer la transmission via les premiers pseudo-canaux (1), est configuré pour :
sélectionner en fonction du cycle d'horloge pendant lequel la commande de ligne non répliquée délivrée en sortie occupe un bus de commande, une commande de ligne participant à l'arbitrage final pendant au moins un cycle d'horloge après la sortie de la commande de ligne non répliquée, et délivrer en sortie
la commande de ligne répliquée et indiquer la transmission via le premier pseudo-canal (1).

10. Contrôleur de mémoire (120) selon la revendication 9, dans lequel l'arbitre de commande de ligne configuré, selon le cycle d'horloge pendant lequel la commande de ligne non répliquée délivrée en sortie occupe un bus de commande, pour sélectionner une commande de ligne participant à l'arbitrage final pendant au moins un cycle d'horloge après la sortie de la commande de ligne non répliquée, est configuré pour :
sélectionner, si la commande de ligne non répliquée délivrée en sortie occupe le bus de commande pendant 1,5 cycle d'horloge, une commande de ligne qui ne soit pas en conflit avec la commande de ligne délivrée en sortie et qui occupe le bus de commande pendant 0,5 cycle d'horloge pour participer à l'arbitrage final pendant un premier cycle d'horloge après un cycle d'horloge courant de sortie de la commande de ligne non répliquée ; et interdire, pendant un deuxième cycle d'horloge jusqu'à un troisième cycle d'horloge après le cycle d'horloge courant, à une commande de ligne non répliquée de participer à l'arbitrage final ; l'arbitre de commande de ligne, configuré pour délivrer en sortie la commande de ligne répliquée et indiquer la transmission via le premier pseudo-canal (1), est configuré pour délivrer en sortie séquentiellement, pendant le deuxième cycle d'horloge jusqu'au troisième cycle d'horloge, selon une séquence temporelle d'entrée de commandes de ligne répliquées pendant le cycle d'horloge courant jusqu'au premier cycle d'horloge, les commandes de ligne répliquées et indiquer que l'adresse de pseudo-canal appartient au premier pseudo-canal (1) ; dans lequel la commande de ligne sélectionnée qui occupe le bus de commande pendant 0,5 cycle d'horloge est délivrée en sortie par l'arbitre de commande de ligne pendant 0,5 cycle d'horloge après le premier cycle d'horloge, la commande de ligne délivrée en sortie est répliquée par le réplicateur de commandes (220), et la commande de ligne répliquée correspondante est délivrée en sortie par l'arbitre de commande de ligne pendant 0,5 cycle d'horloge après le troisième cycle d'horloge ; ou
interdire, si la commande de ligne non répliquée occupe le bus de commande pendant 1 cycle d'horloge, à une commande de ligne non répliquée de participer à l'arbitrage final pendant un premier cycle d'horloge après un cycle d'horloge courant de sortie de la commande de ligne non répliquée ; l'arbitre de commande de ligne, configuré pour délivrer en sortie la commande de ligne répliquée et indiquer la transmission via le premier pseudo-canal (1), est configuré pour : délivrer en sortie, pendant le premier cycle d'horloge après le cycle d'horloge courant, la commande de ligne répliquée correspondante et indiquer que l'adresse de pseudo-canal appartient au premier pseudo-canal (1) ; ou
sélectionner, si la commande de ligne non répliquée délivrée en sortie occupe le bus de commande pendant 0,5 cycle d'horloge, une commande de ligne qui ne soit pas en conflit avec la commande de ligne délivrée en sortie et qui occupe le bus de commande pendant 0,5 cycle d'horloge pour participer à l'arbitrage final pendant 0,5 cycle d'horloge après un cycle d'horloge courant de sortie de la commande de ligne ; et interdire, pendant un premier cycle d'horloge après le cycle d'horloge courant, à une commande de ligne non répliquée de participer à l'arbitrage final ; l'arbitre de commande de ligne, configuré pour délivrer en sortie la commande de ligne répliquée et indiquer la transmission via le premier pseudo-canal (1), est configuré pour : délivrer en sortie séquentiellement, pendant le premier cycle d'horloge après le cycle d'horloge courant, selon une séquence temporelle d'entrée de commandes de ligne répliquées pendant le cycle d'horloge courant, les commandes de ligne répliquées et indiquer que l'adresse de pseudo-canal appartient au premier pseudo-canal (1) ; dans lequel la commande de ligne sélectionnée qui occupe le bus de commande pendant 0,5 cycle d'horloge est délivrée en sortie par l'arbitre de commande de ligne pendant le premier cycle d'horloge, la commande de ligne délivrée en sortie est répliquée par le réplicateur de commandes (220), et la commande de ligne répliquée correspondante est délivrée en sortie par l'arbitre de commande de ligne 0,5 cycle d'horloge après le premier cycle d'horloge.

11. Contrôleur de mémoire (120) selon l'une des revendications 1 à 10, dans lequel le circuit logique de contrôle commun (210) est en outre configuré pour échantillonner, lorsque l'arbitre final (230) délivre en sortie une commande non répliquée, la commande délivrée en sortie par l'arbitre final (230), et démarrer un comptage de paramètre de temporisation pour une commande échantillonnée en fonction d'une base de comptage d'un paramètre de temporisation ;
dans lequel la base de comptage du paramètre de temporisation est telle que, pour une commande occupant le bus de commande pendant 1,5 cycle d'horloge, le comptage de paramètre de temporisation est réalisé avec un premier front montant d'horloge lorsque la commande est délivrée en sortie par l'arbitre final (230) comme position de départ, de sorte que le comptage de paramètre de temporisation sur la commande occupant le bus de commande pendant 1,5 cycle d'horloge soit réalisé un cycle d'horloge plus tôt que celui sur un cycle d'horloge standard ;
dans lequel le circuit logique de contrôle commun (210), configuré pour démarrer un comptage de paramètre de temporisation pour une commande échantillonnée en fonction d'un paramètre de comptage d'un paramètre de temporisation, est configuré pour :
réaliser, en fonction de la base de comptage du paramètre de temporisation, un comptage de paramètre de temporisation sur une commande actuellement échantillonnée selon une variation de cycle d'horloge de commandes adjacentes échantillonnées occupant le bus de commande ; et dans lequel le circuit logique de contrôle commun (210), configuré pour réaliser, en fonction de la base de comptage du paramètre de temporisation, le comptage de paramètre de temporisation sur une commande actuellement échantillonnée selon une variation de cycle d'horloge de commandes adjacentes échantillonnées occupant le bus de commande, est configuré pour :
déterminer la variation de cycle d'horloge des commandes adjacentes échantillonnées occupant le bus de commande ;
réaliser, si la variation de cycle d'horloge des commandes adjacentes échantillonnées occupant le bus de commande est l'une des suivantes : 1 cycle d'horloge à 1 cycle d'horloge, 0,5 cycle d'horloge à 0,5 cycle d'horloge, 1,5 cycle d'horloge à 1,5 cycle d'horloge, 1 cycle d'horloge à 0,5 cycle d'horloge, et 0,5 cycle d'horloge à 1 cycle d'horloge, un comptage de paramètre de temporisation sur la commande actuellement échantillonnée en fonction du cycle d'horloge standard en fonction de la base de comptage du paramètre de temporisation ;
réaliser, si la variation de cycle d'horloge des commandes adjacentes échantillonnées occupant le bus de commande est soit de 1,5 cycle d'horloge à 0,5 cycle d'horloge, soit de 1,5 cycle d'horloge à 1 cycle d'horloge, un comptage sur la commande actuellement échantillonnée selon le cycle d'horloge standard plus 2 cycles d'horloge en fonction de la base de comptage du paramètre de temporisation ;
réaliser, si la variation de cycle d'horloge des commandes adjacentes échantillonnées occupant le bus de commande est soit de 0,5 cycle d'horloge à 1,5 cycle d'horloge, soit de 1 cycle d'horloge à 1,5 cycle d'horloge, un comptage sur la commande actuellement échantillonnée selon le cycle d'horloge standard moins 1 cycle d'horloge en fonction de la base de comptage du paramètre de temporisation.

12. Contrôleur de mémoire (120) selon la revendication 11, dans lequel le circuit logique de contrôle commun (210) comprend : une file d'attente de commandes commune, un module d'enregistrement de page commun, un module de vérification de temporisation commun, un module de contrôle de rafraîchissement commun et un arbitre de file d'attente commune, partagés par le zéroième pseudo-canal (0) et le premier pseudo-canal (1) ;
la file d'attente de commandes commune est configurée pour stocker des informations de demande de la demande d'accès à la mémoire ;
le module d'enregistrement de page commun est configuré pour enregistrer des informations de bloc d'un bloc dans la mémoire (140) ;
le module de vérification de temporisation commun est configuré pour exécuter l'étape consistant à échantillonner, lorsque l'arbitre final (230) délivre en sortie une commande de ligne non répliquée, la commande délivrée en sortie par l'arbitre final (230), et démarrer un comptage de paramètre de temporisation pour une commande échantillonnée en fonction d'une base de comptage d'un paramètre de temporisation ;
le module de contrôle de rafraîchissement commun est configuré pour gérer une opération de rafraîchissement de la mémoire (140) ;
l'arbitre de file d'attente commune est configuré pour déterminer la commande de demande correspondant à la demande d'accès à la mémoire et l'envoyer à l'arbitre final (230) selon des informations fournies par au moins un des modules suivants : le module d'enregistrement de page commun, le module de vérification de temporisation commun et le module de contrôle de rafraîchissement commun, ainsi que les informations de demande de la demande d'accès à la mémoire stockées dans la file d'attente de commandes commune.

13. Procédé d'accès à la mémoire, appliqué au contrôleur de mémoire (120) selon l'une des revendications 1 à 12, dans lequel des données sont transmises entre le contrôleur de mémoire (120) et une mémoire (140) via un canal de mémoire (131), le canal de mémoire (131) comprenant un zéroième pseudo-canal (0) et un premier pseudo-canal (1) ; le procédé comprend :
la détermination (S310) d'une commande de demande correspondant à une demande d'accès à la mémoire, dans lequel la commande de demande correspondant à la demande d'accès à la mémoire participe à un arbitrage final ;
et la réplication (S311), lorsqu'une commande délivrée en sortie par l'arbitrage final est une commande de demande non répliquée et que la commande de demande satisfait une condition de réplication prédéfinie, de la commande de demande afin d'obtenir une commande de demande répliquée correspondante, dans lequel la commande de demande répliquée participe à l'arbitrage final ;
la réalisation (S312) de l'arbitrage final sur une commande participant à l'arbitrage final ; si la commande validée par l'arbitrage final est une commande de demande non répliquée, la sortie de la commande de demande et l'indication de la transmission via le zéroième pseudo-canal (0) ; et pendant au moins un cycle d'horloge après la sortie de la commande de demande non répliquée, l'arbitrage final pour valider la commande de demande répliquée correspondante, la sortie de la commande de demande répliquée et l'indication de la transmission via le premier pseudo-canal (1).

14. Puce, comprenant : au moins un cœur de processeur (110), le contrôleur de mémoire (120) selon l'une des revendications 1 à 12, une couche physique de mémoire (130) et la mémoire (140) ;
dans laquelle l'au moins un cœur de processeur (110) est connecté au contrôleur de mémoire (120) ; et la couche physique de mémoire (130) comprend le canal de mémoire (131).

15. Dispositif électronique, comprenant la puce selon la revendication 14 ou le contrôleur de mémoire (120) selon l'une des revendications 1 à 12.
